(19) **Europäisches Patentamt / European Patent Office / Office européen des brevets**

(11) **EP 4 484 029 A1**

(12) **EUROPEAN PATENT APPLICATION**
published in accordance with Art. 153(4) EPC

(43) Date of publication:
01.01.2025 Bulletin 2025/01

(21) Application number: 23807724.2

(22) Date of filing: 19.05.2023

(51) International Patent Classification (IPC):
$B21D\ 22/20^{(2006.01)}$    $B21D\ 24/00^{(2006.01)}$

(52) Cooperative Patent Classification (CPC):
B21D 22/20; B21D 24/00

(86) International application number:
PCT/JP2023/018803

(87) International publication number:
WO 2023/224123 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.05.2022 JP 2022082169

(71) Applicant: NIPPON STEEL CORPORATION
Chiyoda-ku
Tokyo 100-8071 (JP)

(72) Inventors:
• FUJITA, Soshi
  Tokyo 100-8071 (JP)
• SUZUKI, Yuki
  Tokyo 100-8071 (JP)
• IMAI, Takeshi
  Tokyo 100-8071 (JP)
• MAKI, Jun
  Tokyo 100-8071 (JP)
• IRIKAWA, Hideaki
  Tokyo 100-8071 (JP)

(74) Representative: Vossius & Partner
Patentanwälte Rechtsanwälte mbB
Siebertstrasse 3
81675 München (DE)

(54) **METHOD FOR PRODUCING LAYERED HOT STAMP MOLDED BODY**

(57) To improve both the slow temperature increasing rate of an overlapped part and the one-sheet part being heated for an excessive amount of time when an Al-based plated steel sheet is used as a raw material. The present invention is a heating method of heating an overlapped blank for hot stamping in a heating furnace at a temperature T1, the overlapped blank for hot stamping including: a first Al-based plated steel sheet having a sheet thickness d1; and a second Al-based plated steel sheet having a sheet thickness d2, the second Al-based plated steel sheet overlapped and welded on the first A-based plated steel sheet, having a smaller area than the first Al-based plated steel sheet, and including a carbon-based black coating at a surface of the Al-based plated steel sheet on the side not in contact with the first Al-based plated steel sheet, in which the overlapped blank for hot stamping satisfies Expression (a) to Expression (c), and a heating temperature is set to t1 or more and t2 + Δt2 or less.

[FIG. 5]

**Description**

[Technical Field]

The present invention relates to a method of manufacturing an overlapped hot stamped component.

[Background Art]

In recent years, a steel sheet that achieves both high strength and high formability has been demanded in the application of steel sheets for an automobile. One example corresponding to the steel sheet that achieves both high strength and high formability is a TRIP (Transformation Induced Plasticity) steel using martensite transformation of retained austenite. A high-strength steel sheet excellent in formability and having a strength of about 1000 MPa class can be manufactured with the TRIP steel. However, it is difficult to ensure formability in ultrahigh-strength steel having a higher strength (for example, 1500 MPa or more) using the technique of the TRIP steel, and further, there is a problem of poor shape fixability after forming and inferiority in dimensional accuracy of a formed product.

In contrast to the construction method of forming near room temperature (what is called a cold press construction method) as described above, a construction method recently attracting attention is hot stamping (also called hot press, hot pressing, die-quenching, press quenching, or the like). This hot stamping is a method of manufacturing a part to obtain a material quality of a desired high strength after pressing by heating a steel sheet up to an Ac3 point or higher (for example, 800°C or higher) to make it into austenite and immediately thereafter pressing it in hot working to thereby ensure formability, and rapidly cooling it down to an Ms point or lower (for example, 400°C or lower) by a metal mold during keeping it at a bottom dead center to make the material into martensite to thereby quench it. By this construction method, an automobile part excellent also in shape fixability after forming can be obtained.

On the other hand, various press-molded bodies used for parts forming the vehicle body of the automobile have been required to be improved in a wide variety of performances and characteristics from the various viewpoints such as static strength, dynamic strength, collision safety, and weight saving. For example, an automobile part such as A-pillar reinforce, B-pillar reinforce, bumper reinforce, tunnel reinforce, side sill reinforce, roof reinforce, or floor cross member is required to have a collision resistant property only at a specific site of each automobile part more than a general site except the specific site.

Hence, a construction method of overlapping and welding a plurality of steel sheets only at a portion corresponding to the specific site requiring reinforcement of the automobile part and then hot stamping the obtained steel sheet to manufacture an overlapped hot stamped component has been actually employed since about 2007 (refer to Patent Document 1 and Patent Document 2). This construction method can partially reinforce only the specific site of the overlapped hot stamped component while reducing the number of press metal molds, and can contribute also to a reduction in weight of the part because the part thickness is not unnecessarily increased. Incidentally, the blank fabricated by overlapping and welding steel sheets as above is called an overlapped blank (also called a patch work blank).

In the case where the steel sheets to be overlapped are non-plated steel sheets, oxide scales are generated on the surface of an overlapped hot-pressed member to be manufactured due to high-temperature heating accompanying the hot pressing. Therefore, a problem is that there is a need to remove the generated oxide scales, for example, by shot blast processing after the hot pressing or that the corrosion resistance of the manufactured overlapped hot-pressed member is likely to decrease. Further, a problem peculiar to the case of using the non-plated steel sheets as a raw material of the overlapped blank is that a non-overlapped portion (also called "one-sheet part" below) can be subjected to the shot blast processing but removal of the oxide scales formed between the steel sheets at an overlapped portion (also called "overlapped part" below) by the shot blast processing is difficult, and particularly the corrosion resistance is likely to decrease.

If the steel sheets to be overlapped are plated steel sheets, the need to perform the shot blast processing on the overlapped hot-pressed member after the hot pressing is eliminated. General examples of the plated steel sheet used for hot pressing include a Zn-based plated steel sheet and an Al-based plated steel sheet. Regarding both of Zn-based plating and Al-based plating, the Zn-based plating becomes Zn-Fe-based plating and the Al-based plating becomes Al-Fe-based plating after hot stamping heating by the alloying reaction of Fe diffusing into the plating.

As described in Patent Document 2 and Patent Document 3, a Zn-based plated steel sheet (namely, a plated steel sheet containing 50 mass% or more of Zn (Zn plating or Zn-based alloy plating of a Zn-Fe alloy, a Zn-Ni alloy, or a Zn-Fe-Al alloy)) suppresses the generation of the oxide scales to eliminate the problem of the need for the shot blast processing. However, in the case of using the Zn-based plated steel sheet as a raw material of the overlapped blank and performing bending on the overlapped part during the hot stamping, cracks occur in a base iron to cause a problem in the collision resistant property in some cases. This is because when zinc relatively low in melting point remains, Zn becomes a liquid metal and intrudes from the plating surface into the base iron, due to a problem of so-called liquid-metal embrittlement. Incidentally, the bending is a means for ensuring the collision resistant property in terms of a shape, and performing the bending on the overlapped part is a very important using method of the overlapped component.

As described in Patent Document 2 and Patent Document 3, general examples of the measure for the liquid-metal embrittlement employed in the case of using the Zn-based plated steel sheet as the hot stamp include a measure of increasing the melting point of the plating by promoting the Zn-Fe alloying reaction during the hot stamping heating and a measure of waiting for solidification of zinc by reducing the forming temperature during the bending of the hot stamping. However, a problem peculiar to the case of using the zinc-based plated steel sheet as a raw material of the overlapped blank is a problem that the overlapped part is larger in sheet thickness than the one-sheet part and therefore has a slow temperature increasing rate and it is difficult to promote the Zn-Fe alloying reaction during the hot stamping heating. Further, regarding the forming temperature during the hot stamping, since the sheet thickness of the overlapped part is thicker than that of the one-sheet part, the cooling rate is also slow, and there is also a problem of the one-sheet part early cooling when waiting for the overlapped part to cool, failing to ensure the martensite structure. Further, Zn becomes a film of zinc oxide to suppress the evaporation of Zn at the one-sheet part, but deficiency of oxygen occurs in an atmosphere between the steel sheets at the overlapped part and therefore Zn evaporates, resulting in that the problems in a decrease in corrosion resistance and in liquid-metal embrittlement at the overlapped part become more serious.

Such an Al-based plated steel sheet as disclosed in Patent Document 4 (namely, a plated steel sheet containing 50 mass% or more of Al (Al plating or Al-based alloy plating of an Al-Si alloy or an Al-Fe-Si alloy)) suppresses the generation of the oxide scales as with Zn to eliminate the problem of the need for the shot blast processing and further causes no problem in the liquid-metal embrittlement with Al, which has a higher melting point than Zn. Thus, the Al-based plated steel sheet is suitable for use as a raw material of the overlapped blank.

Thus, in recent years, the present inventors have conducted extensive studies on the Al-based plated steel sheet for the overlapped blank and the overlapped blank using the Al-based plated steel sheet, and have made various proposals (for example, see Patent Document 5 to Patent Document 8 below).

[Prior Art Document]

[Patent Document]

[Patent Document 1] Japanese Laid-open Patent Publication No. 2011-88484

[Patent Document 2] Japanese Patent No. 6178301

[Patent Document 3] Japanese Laid-open Patent Publication No. 2016-124029

[Patent Document 4] International Publication No. WO 2002/103073

[Patent Document 5] Japanese Laid-open Patent Publication No. 2011-149084

[Patent Document 6] International Publication No. WO 2010/005121

[Patent Document 7] International Publication No. WO 2021/172379

[Patent Document 8] International Publication No. WO 2019/194308

[Disclosure of the Invention]

[Problems to Be Solved by the Invention]

However, as the problem peculiar to the case of using such an Al-based plated steel sheet as disclosed in Patent Document 4 as a raw material of the overlapped blank, the slow temperature increasing rate of the overlapped part during hot stamping heating and the difference in temperature increasing rate between the overlapped part and the non-overlapped part (one-sheet part) cause a problem that the productivity of parts of hot stamping decreases, as well as a problem of spot weldability.

That is, it is necessary to increase the heating time so that the overlapped part reaches the austenitizing temperature or higher, which causes a problem of low productivity of parts. In particular, in the case of the steel sheet having no Al-based plating (namely, when the steel sheet surface is Fe), Fe oxidizes and the steel sheet turns black, and in the case of the Zn-based plating, the Zn-Fe alloying reaction progresses more easily than in the Al-based plating, causing the metallic luster to disappear and the steel sheet to turn black, In contrast to these steel sheets, in the Al-based plated steel sheet, the surface has a silver-gray metallic luster and further the Al-based plating has excellent oxidation resistance, and thus the metallic luster is maintained for a long time during heating, resulting in that the temperature increasing rate becomes slower. As a result, the problem that the productivity of parts of hot stamping decreases is likely to occur.

Further, as described in Patent Document 3, the Al-Fe alloying reaction in the plating of the Al-based plated steel sheet that progresses by the hot stamping heating is important for the spot weldability of the plating. Here, when the heating time for hot stamping is prolonged, the one-sheet part of the steel sheet is heated for an excessive amount of time, and thus the Al-Fe alloying reaction progresses and an Al-Fe-based alloy plated layer with a high Fe concentration is formed. As a result, a further problem arises in that the spot weldability decreases at the one-sheet part of the steel sheet.

Therefore, in order to suppress the oxide scales of the base iron and prevent the problem of liquid-metal embrittlement as explained above, it is desired to solve the problems of the productivity of parts of hot stamping and the spot weldability at the one-sheet part by the invention that improves both the slow temperature increasing rate of the overlapped part and the one-sheet part being heated for an excessive amount of time regarding the Al-based plated steel sheet suitable for use as a raw material of the overlapped blank for hot stamping.

There has been still room for improvement also in the techniques described in Patent Document 5 to Patent Document 8 described above regarding the problems of the productivity of parts of hot stamping and the spot weldability at the one-sheet part. For example, in Patent Document 8 and the like described above, heating during hot stamping has been performed by controlling the heating time. More specifically, for example, in a preliminary test or the like, the temperature increasing rate or the temperature increasing time of the overlapped part has been confirmed. Then, after taking into account variations in the obtained findings regarding the temperature increasing rate or the temperature increasing time, or another factor, heating during hot stamping has been performed with a relatively long holding time such as 10 minutes, for example. Even in such a case, there has been still room for improvement regarding the problem of spot weldability of the one-sheet part as described above.

Hence, the present invention has been made in consideration of the above problems, and an object of the present invention is to provide a method of manufacturing an overlapped hot stamped component that is capable of improving both the slow temperature increasing rate of an overlapped part and the one-sheet part being heated for an excessive amount of time when an Al-based plated steel sheet is used as a raw material.

[Means for Solving the Problems]

The present inventors conducted a diligent study repeatedly to solve the above problems and focused on lightness L* defined in JIS Z 8781-4: 2013 for the surface of an Al-based plated steel sheet, and consequently found that lower lightness increases the temperature increasing rate of hot stamping heating of the Al-based plated steel sheet. This is thought to be because a lower value of the lightness suggests that the surface of the Al-based plated steel sheet is blackened, and thus characteristics that easily absorb heat are obtained. In particular, for improving the slow temperature increasing rate of the overlapped part of a patch work, they found that there is a minimum heating time depending on the lightness L* of the overlapped part, the sheet thickness (namely, the total of the thicknesses of the two steel sheets), and the heating temperature.

Further, in order to prevent the one-sheet part from being heated for an excessive amount of time, it is important to conversely increase the lightness at the one-sheet part to obtain characteristics that make it difficult to absorb heat, thereby reducing the temperature increasing rate during hot stamping heating. Using the Al-based plated steel sheet makes it possible to obtain high lightness due to the surface having a silver-gray metallic luster. In particular, they found that there is a maximum heating time depending on the lightness L* of the one-sheet part, the sheet thickness, and the heating temperature for preventing the one-sheet part from being heated excessively

Further, they found that using a carbon-based black coating for the upper layer of the Al-based plated steel sheet makes it possible to reduce the lightness. In particular, they found that the carbon-based black coating is burned off by combustion by the oxidation reaction during the hot stamping heating, thus making it possible to suppress the decrease in spot weldability of the overlapped hot stamped component caused by the remaining carbon-based black coating. In order to obtain such a burn-off effect due to the combustion of the carbon-based black coating, it is important to use the carbon-based black coating at the face of the side where the two steel sheets of the overlapped blank for hot stamping are not in contact with each other.

The gist of the present invention completed based on the above-described findings is as follows.

[1] A heating method of an overlapped blank for hot stamping includes: heating an overlapped blank for hot stamping in a heating furnace at a temperature T1, the overlapped blank for hot stamping including: a first Al-based plated steel sheet having a sheet thickness d1; and a second Al-based plated steel sheet having a sheet thickness d2, the second Al-based plated steel sheet overlapped and welded on the first A-based plated steel sheet, having a smaller area than the first Al-based plated steel sheet, and including a carbon-based black coating at a surface of the Al-based plated steel sheet on the side not in contact with the first Al-based plated steel sheet, in which the overlapped blank for hot stamping satisfies Expression (a) to Expression (c) below, and a heating temperature is set to t1 or more and t2 + Δt2 or less.

Here, T1 is the temperature of the heating furnace, t1 is the smaller of the solutions to a quadratic equation in Equation (d) below, t2 is the smaller of the solutions to a quadratic equation in Equation (e) below, and regarding Δt2, Equation (f) below is established, the units of d, d1, and d2 are mm, the unit of T1 is °C, and the units of t1, t2, and Δt2 are minute.

$$40 \leq L^*b \leq 60...\text{Expression (a)}$$

$$(L^*b + 20) \leq L^*1 \leq 80...\text{Expression (b)}$$

$$2.5 \leq d \leq 4.8...\text{Expression (c)}$$

$$T1 = A1 \cdot t1^2 + B1 \cdot t1 + C1...\text{Equation (d)}$$

$$T1 = A2 \cdot t2^2 + B2 \cdot t2 + C2...\text{Equation (e)}$$

$$\Delta t2 = 2.6960 \times 10^{13} \times e^{(-0.03205 \times T1)}...\text{Equation (f)}$$

Regarding L*b, L*1, L*1a, L*1b, L*2b, A1, B1, C1, A2, B2 and C2, the following are set.

$$L^*b = 0.5 \times (L^*1b + L^*2b)...\text{Equation (a-1)}$$

$$L^*1 = 0.5 \times (L^*1a + L^*1b)...\text{Equation(b-1)}$$

$$d = d1 + d2...\text{Equation (c-1)}$$

L*1a: lightness L* of the surface on the side in contact with the second steel sheet of the first steel sheet
L*1b: lightness L* of the surface on the side not in contact with the second steel sheet of the first steel sheet
L*2b: lightness L* of the surface on the side not in contact with the first steel sheet of the second steel sheet

$A1 = -0.3645d^5 + 6.343d^4 - 43.822d^3 + 151.71d^2 - 268.89d + 205.68$ — Equation (d-1)

$B1 = 2.9347d^5 - 47.313d^4 + 298.84d^3 - 936.35d^2 + 1518.1d - 1197.6$ — Equation (d-2)

$$C1 = 1381.57...\text{Equation (d-3)}$$

$A2 = -0.4367d1^5 + 7.3789d1^4 - 49.107d1^3 + 161.95d1^2 - 269.2d1 + 188.97$ — Equation (e-1)

$B2 = 1.8594d1^5 - 31.034d1^4 + 204.62d1^3 - 675.11d1^2 + 1159.2d1 - 964.59$ — Equation (e-2)

$$C2 = 1367.39...\text{Equation (e-3)}$$

[2] The heating method of the overlapped blank for hot stamping according to [1], in which the heating time is set to t2 + Δt2' or less.

Here, regarding Δt2', Equation (f) below is established, and the unit of Δt2' is minute.

$$\Delta t2' = 1.498 \times 10^{13} \times e^{(-0.03198 \times T1)} ...\text{Equation (f)}$$

[3] A heating method of an overlapped blank for hot stamping includes: heating an overlapped blank for hot stamping in a heating furnace at a temperature T3, the overlapped blank for hot stamping including: a first Al-based plated steel sheet having a sheet thickness d1; and a second Al-based plated steel sheet having a sheet thickness d2, the second Al-based plated steel sheet overlapped and welded on the first A-based plated steel sheet, having a smaller area than the first Al-based plated steel sheet, and including a carbon-based black coating at a surface layer of the Al-based plated steel sheet on the side not in contact with the first Al-based plated steel sheet, in which the first Al-based plated steel sheet includes a carbon-based black coating at a surface of the side not in contact with the second Al-based plated steel sheet, the overlapped blank for hot stamping satisfies Expression (A) to Expression (C) below, and a heating time is set to t3 or more and t4 + Δt4 or less.

Here, T3 is the temperature of the heating furnace, t3 is the smaller of the solutions to a quadratic equation in Equation (D) below, t4 is the smaller of the solutions to a quadratic equation in Equation (E) below, and regarding Δt4, Equation (F) below is established, the units of d, d1, and d2 are mm, the unit of T3 is °C, and the units of t3, t4, and Δt4 are minute.

$$20 \leq L*b < 40 ...\text{Expression (A)}$$

$$(L*b + 20) \leq L*1 \leq 60 ...\text{Expression (B)}$$

$$2.5 \leq d \leq 4.8 ...\text{Expression (C)}$$

$$T3 = A3{\cdot}t3^2 + B3{\cdot}t3 + C3 ...\text{Equation (D)}$$

$$T3 = A4{\cdot}t4^2 + B4{\cdot}t4 + C4 ...\text{Equation (E)}$$

$$\Delta t4 = 2.6960 \times 10^{13} \times e^{(-0.03205 \times T3)} ...\text{Equation (F)}$$

Regarding L*b, L*1, L*1a, L*1b, L*2b, A3, B3, C3, A4, B4 and C4, the following are set.

$$L*b = 0.5 \times (L*1b + L*2b) ...\text{Equation (A-1)}$$

$$L*1 = 0.5 \times (L*1a + L*1b) ...\text{Equation (B-1)}$$

$$d = d1 + d2 ...\text{Equation (C-1)}$$

L*1a: lightness L* of the surface on the side in contact with the second steel sheet of the first steel sheet
L*1b: lightness L* of the surface on the side not in contact with the second steel sheet of the first steel sheet
L*2b: lightness L* of the surface on the side not in contact with the first steel sheet of the second steel sheet

A3 = -0.5693d$^5$ + 9.8168d$^4$ - 67.002d$^3$ + 228.11d$^2$ - 394.85d + 291.77          Equation (D-1)

B3 = 3.0472d$^5$ - 49.829d$^4$ + 320.43d$^3$ - 1026.6d$^2$ + 1706.7d - --> 1374.3          Equation (D-2)

$$C3 = 1394.21 ...\text{Equation (D-3)}$$

$$A4 = -0.3645d1^5 + 6.343d1^4 - 43.822d1^3 + 151.71d1^2 - 268.89d1 + 205.68 \qquad \text{Equation (E-1)}$$

$$B4 = 2.9347d1^5 - 47.313d1^4 + 298.84d1^3 - 936.35d1^2 + 1518.1d1 - 1197.6 \qquad \text{Equation (E-2)}$$

$$C4 = 1381.57...\text{Equation (E-3)}$$

[4] The heating method of the overlapped blank for hot stamping according to [3], in which the heating time is set to t4 + Δt4' or less.
Here, regarding Δt4', Equation (F') below is established, and the unit of Δt4' is minute.

$$\Delta t4' = 1.498 \times 10^{13} \times e^{(-0.03198 \times T3)}...\text{Equation (F')}$$

[Effect of the Invention]

As explained above, according to the present invention, when the Al-based plated steel sheet is used as a raw material of the overlapped blank for hot stamping, it is possible to improve both the slow temperature increasing rate of the overlapped part and the one-sheet part being heated for an excessive amount of time, and to solve the problems of the part productivity of the hot stamped component and the spot weldability of the one-sheet part.

[Brief Description of the Drawings]

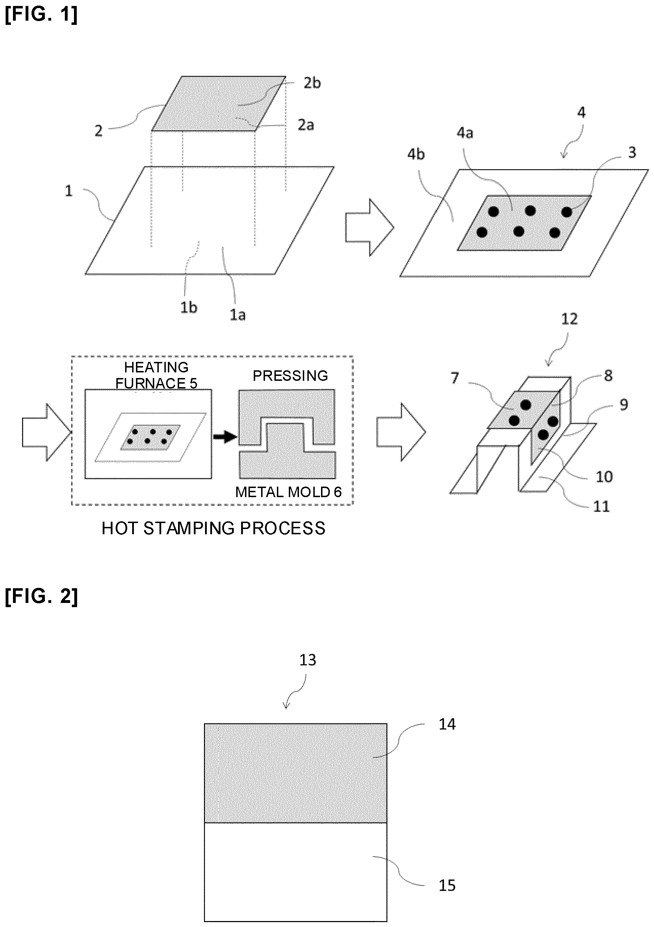

[FIG. 1] FIG. 1 is an explanatory view schematically illustrating one example of a method of manufacturing an overlapped hot stamped component for obtaining an overlapped hot stamped component using an overlapped blank for hot stamping according to an embodiment of the present invention.
[FIG. 2] FIG. 2 is an explanatory view schematically illustrating a structure of an Al-based plated steel sheet including an Al-based plated layer on a surface of a base material steel sheet of the overlapped blank for hot stamping according to the embodiment.

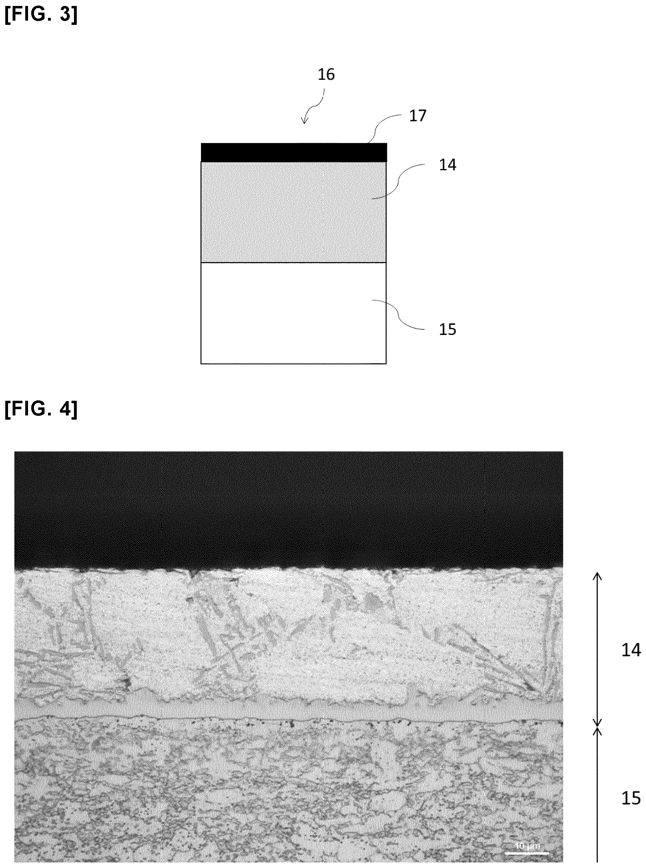

[FIG. 3] FIG. 3 is an explanatory view schematically illustrating a structure of the Al-based plated steel sheet including the Al-based plated layer on the surface of the base material steel sheet, and including a carbon-based black coating at an upper layer of the Al-based plated layer of the overlapped blank for hot stamping according to the embodiment.
[FIG. 4] FIG. 4 is a view illustrating a cross section of the Al-based plated steel sheet including the Al-based plated layer on the surface of the base material steel sheet of the overlapped blank for hot stamping according to the embodiment.

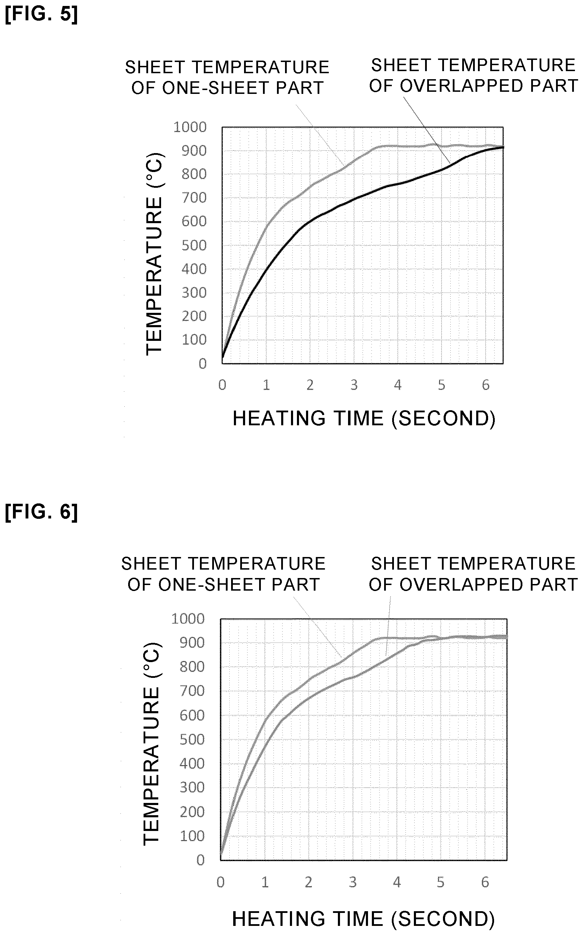

[FIG. 5] FIG. 5 is a view illustrating a comparative example in which a sheet temperature of an overlapped part and a sheet temperature of a one-sheet part were measured when in the method of manufacturing the overlapped hot stamped component according to the embodiment, a first steel sheet being the Al-based plated steel sheet and a second steel sheet having an area smaller than the first steel sheet being the Al-based plated steel sheet were overlapped and spot welded and then were subjected to hot stamping heating.
[FIG. 6] FIG. 6 is a view illustrating an invention example in which the sheet temperature of the overlapped part and the sheet temperature of the one-sheet part were measured when in the method of manufacturing the overlapped hot stamped component according to the embodiment, the first steel sheet being the Al-based plated steel sheet and the second steel sheet including a carbon-based black coating at an upper layer of the Al-based plated steel sheet and having an area smaller than the first steel sheet were overlapped and spot welded and then were subjected to hot stamping heating.

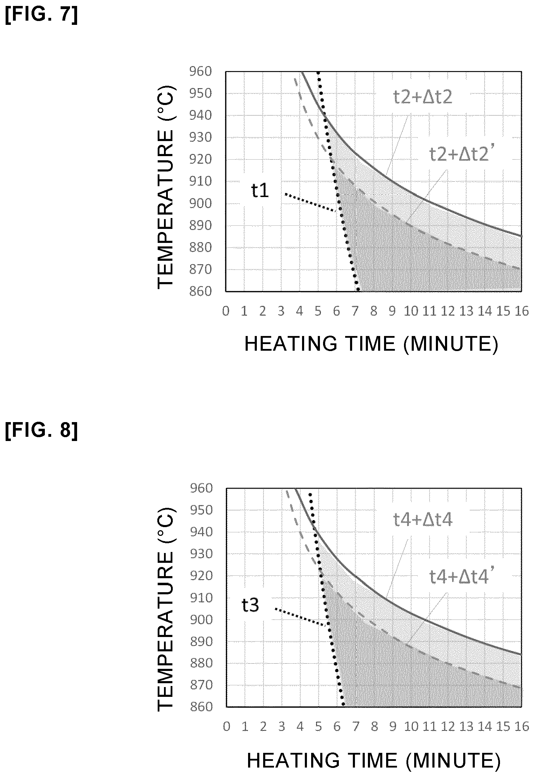

[FIG. 7] FIG. 7 is a view illustrating the relationship between a heating temperature T1 and heating times t1, t2 + Δt2, and t2 + Δt2' in the method of manufacturing the overlapped hot stamped component according to the embodiment.
[FIG. 8] FIG. 8 is a view illustrating the relationship between a heating temperature T3 and heating times t3, t4 + Δt4, and t4 + Δt4' in the method of manufacturing the overlapped hot stamped component according to the embodiment.

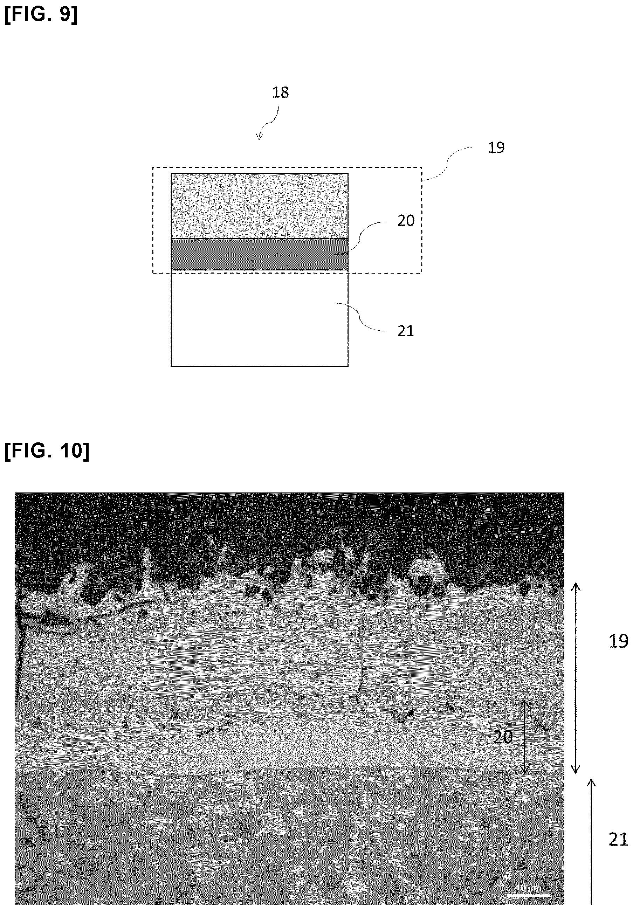

[FIG. 9] FIG. 9 is an explanatory view schematically illustrating a structure of an Al-Fe-based alloy plated steel sheet including an Al-Fe-based alloy plated layer on a surface of a base material steel sheet and including a diffusion layer that is included in the Al-Fe-based alloy plated layer and is in contact with a steel sheet base of the overlapped hot stamped component according to the embodiment.
[FIG. 10] FIG. 10 is a view illustrating a result obtained by observing a cross section of the Al-Fe-based alloy plated steel sheet including the Al-Fe-based alloy plated layer on the surface of the base material steel sheet of the hot stamped component according to the embodiment using an optical microscope after nital etching.

[Embodiments for Carrying out the Invention]

Preferred embodiments of the present invention will be explained below in detail referring to the accompanying drawings. Incidentally, in the description and the drawings, the same codes are given to components having substantially the same functional configurations to omit duplicated explanation.

FIG. 1 is an explanatory view schematically illustrating one example of a method of manufacturing an overlapped hot stamped component according to an embodiment of the present invention.

In the method of manufacturing the overlapped hot stamped component according to this embodiment, an overlapped blank for hot stamping is used as a raw material of the overlapped hot stamped component. The overlapped blank for hot stamping according to this embodiment is a type of tailored blank, and is also called a patch work blank.

As schematically illustrated in FIG. 1, in the method of manufacturing the overlapped hot stamped component according to this embodiment, an overlapped blank for hot stamping 4 is composed of a first Al-based plated steel sheet 1 and a second Al-based plated steel sheet 2 smaller in area than the first Al-based plated steel sheet 1 by welding 3 them. In this event, a portion of the overlapped blank for hot stamping 4 where the second Al-based plated steel sheet 2 is overlapped is called an overlapped part 4a, and a non-overlapped portion is called a one-sheet part 4b. Incidentally, in the method of manufacturing the overlapped hot stamped component according to this embodiment, in the overlapped blank for hot stamping 4, the second Al-based plated steel sheet 2 is preferably arranged inside relative to an outer edge portion of the first Al-based plated steel sheet 1 so as to prevent a portion of the second Al-based plated steel sheet 2 protruding from the first Al-based plated steel sheet 1 from existing as schematically illustrated in FIG. 1.

Further, on the surface of the first Al-based plated steel sheet 1, an Al-based plated layer is applied to both faces of a face 1a on the side in contact with the second Al-based plated steel sheet 2 and a face 1b on the side not in contact with the second Al-based plated steel sheet 2, and also on the second Al-based plated steel sheet 2, an Al-based plated layer is applied to both faces of a face 2a on the side in contact with the first Al-based plated steel sheet 1 and a face 2b on the side not in contact with the first Al-based plated steel sheet 1. Further, in the method of manufacturing the overlapped hot stamped component according to this embodiment, at the face 2b on the side not in contact with the first Al-based plated steel sheet of the second Al-based plated steel sheet, a carbon-based black coating (not illustrated) is provided at an upper layer of the Al-based plated layer.

Further, in another one method of manufacturing the overlapped hot stamped component according to this embodiment, on the surface of the first Al-based plated steel sheet 1, the Al-based plated layer is applied to both faces of the face 1a on the side in contact with the second Al-based plated steel sheet 2 and the face 1b on the side not in contact with the second Al-based plated steel sheet 2, and also on the second Al-based plated steel sheet 2, the Al-based plated layer is applied to both faces of the face 2a on the side in contact with the first Al-based plated steel sheet 1 and the face 2b on the side not in contact with the first Al-based plated steel sheet 1. Further, at the face 2b on the side not in contact with the first Al-based plated steel sheet 1 of the second Al-based plated steel sheet, a carbon-based black coating (not illustrated) is provided at an upper layer of the Al-based plated layer, and also at the face 1b on the side not in contact with the second Al-based plated steel sheet of the first Al-based plated steel sheet, a carbon-based black coating (not illustrated) is provided at an upper layer of the Al-based plated layer.

Regarding the overlapped blank for hot stamping 4, as the method of manufacturing the overlapped hot stamped component according to this embodiment, the steel sheets are heated up to an Ac3 point or higher in a heating furnace 5, to thereby be made into austenite, and are press-molded and quenched by a metal mold 6 immediately after taken out of the furnace, and thereby the steel sheets are transformed into martensite. Thus, the overlapped blank for hot stamping 4 becomes an overlapped hot stamped component 12 according to this embodiment excellent in collision resistant property. In this event, at at least a portion of the overlapped part 4a, there exists a portion that becomes a bent part 8 when the overlapped blank for hot stamping 4 becomes the overlapped hot stamped component 12, which is preferable from the viewpoint of improving the collision property of the part of the hot stamped component.

In FIG. 1, a formed product using a hat-shaped metal mold is illustrated as an example of the overlapped hot stamped component 12, and names of sites of the hot stamped component 12 are a head top part 7, the bent part 8 of the head top part, a vertical wall part 10, a flange part 11, and a bent part 9 of the flange part.

Incidentally, although the second Al-based plated steel sheet 2 according to this embodiment is arranged on the outer side of the head top part 7 side in FIG. 1, the object of the present invention can be achieved even by arranging the second Al-based plated steel sheet 2 on the inner side of the head top part 7.

(1. Overlapped blank for hot stamping)

The overlapped blank for hot stamping 4 according to this embodiment will be explained in detail below.

As described above, the overlapped blank for hot stamping 4 according to this embodiment includes the first Al-based plated steel sheet 1 and the second Al-based plated steel sheet 2 welded to the first Al-based plated steel sheet 1 and smaller in area than the first Al-based plated steel sheet 1, in which Al-based plating is applied to both faces of each of the first Al-based plated steel sheet 1 and the second Al-based plated steel sheet 2. In other words, the first Al-based plated steel sheet 1 and the second Al-based plated steel sheet 2 according to this embodiment are Al-based plated steel sheets each including Al-based plated layers on both surfaces of a base material steel sheet.

<Al-based plated steel sheet>

In the overlapped blank for hot stamping 4 according to this embodiment, the chemical composition of the base material steel sheet in each of the first Al-based plated steel sheet 1 and the second Al-based plated steel sheet 2 is not particularly limited. However, in order to obtain, for example, a tensile strength of 1500 MPa or more (about 400 or more in Vickers hardness (namely, HV1 in JIS Z2244-1: 2020) when a test force is set to 9.8107 N), it is preferable to use a base material steel sheet having a chemical composition composed of, by mass%, C: 0.19 to 0.50%, Si: 0.01 to 1.50%, Mn: 0.4 to 2.0%, Cr: 0.01 to 1.00%, Ti: 0.001 to 0.100%, B: 0.0005 to 0.0100%, P: 0.100% or less, S: 0.100% or less, Al: 0 to 1.000%, N: 0 to 0.0100%, Nb: 0 to 0.100%, Mo, Ni, Cu, Co, W, Sn, V, Sb: each 0 to 0.500%, Mg, Ca, Zr, REM, O: each 0 to 0.0100%, and the balance Fe and impurities. Further, the chemical composition of the base material steel sheet of the first Al-based plated steel sheet 1 and the chemical composition of the base material steel sheet of the second Al-based plated steel sheet 2 may be the same or different within the range of the above-described chemical composition.

The method of manufacturing the Al-based plated steel sheet using the above-described chemical composition for the base material steel sheet is not limited in particular. For example, the one manufactured through a conventional pig iron-making process and steel-making process and by processes of hot rolling, pickling, cold rolling, and Sendzimir hot-dip aluminum plating can be used.

In this embodiment, a sheet thickness d1 (mm) of the first Al-based plated steel sheet 1 and a sheet thickness d2 (mm) of the second Al-based plated steel sheet 2 are each preferably 0.5 mm or more and 3.2 mm or less selectively. Setting the sheet thickness to 0.5 mm or more makes it possible to maintain the productivity in the processes of hot rolling and cold rolling at a desired state. Further, setting the sheet thickness to 3.2 mm or less makes it possible to prevent a phenomenon in which the cooling rate decreases during metal mold quenching of hot stamping and hardenability becomes insufficient, to thus fail to obtain a desired tensile strength.

Incidentally, the sheet thickness d1 of the first Al-based plated steel sheet 1 and the sheet thickness d2 of the second Al-based plated steel sheet 2 can be measured using, for example, a micrometer based on JIS B7502: 2016. Further, the above-described sheet thicknesses d1 and d2 are each set to a sheet thickness including the thicknesses of the Al-based plated layers provided on both faces of the base material steel sheet, in addition to the sheet thickness of the base material steel sheet.

[Sheet thickness d = (d1 + d2): 2.5 mm or more and 4.8 mm or less]

In this embodiment, the total sheet thickness d = (d1 + d2) of the portion where the first Al-based plated steel sheet and the second Al-based plated steel sheet are overlapped is 2.5 mm or more and 4.8 mm or less. An increase in the total sheet thickness slows down the temperature increasing rate of the overlapped part to reduce productivity during hot stamping heating. Therefore, the total sheet thickness d is set to 4.8 mm or less. In other words, d satisfies Expression (c) below.

$$2.5 \leq d \leq 4.8 ... \text{Expression (c)}$$

The total sheet thickness d is preferably 4.6 mm or less, more preferably 4.4 mm or less, 4.2 mm or less, or 4.0 mm or less. On the other hand, a decrease in the total sheet thickness not only leads to saturation of the effect of improving the temperature increasing rate, but also leads to a decrease in the collision property of the hot stamped component. Therefore, the total sheet thickness d is set to 2.5 mm or more. The total sheet thickness d is preferably 2.8 mm or more and more preferably 3.2 mm or more.

<Al-based plated layer>

The coating weight of the Al-based plated layer applied to both faces of the first Al-based plated steel sheet 1 is W1a (g/m$^2$) on the surface 1a of the side in contact with the second Al-based plated steel sheet 2, and is W1b (g/m$^2$) on the surface 1b of the side not in contact with the second Al-based plated steel sheet 2. Further, the coating weight of the Al-based plated layer applied to both faces of the second Al-based plated steel sheet 2 is W2a (g/m$^2$) on the surface 2b of the side not in contact with the first Al-based plated steel sheet 1. Here, the values of W1a, W1b, and W2b described above are each independently within a range of 20 g/m$^2$ or more and 120 g/m$^2$ or less per face.

Here, the average coating weight of the Al-based plated layer at the non-overlapped part (one-sheet part 4b) in the overlapped blank for hot stamping 4 is set to W1 (g/m$^2$) per face. In the first Al-based plated steel sheet 1, when the coating weight of the Al-based plated layer on one face of the surface on the side in contact with the second Al-based plated steel sheet 2 is W1a (g/m$^2$) and the coating weight of the Al-based plated layer on one face of the surface on the side not in contact with the second Al-based plated steel sheet 2 is W1b (g/m$^2$), W1 = 0.5 $\times$ (W1a + W1b) is established. Further, the average coating weight of the Al-based plated layer at the overlapped part 4a in the overlapped blank for hot stamping 4 is set to W2 (g/m$^2$) per face. When the coating weight of the Al-based plated layer on one face of the surface 1b on the side not in contact with the second Al-based plated steel sheet 2 in the first Al-based plated steel sheet 1 is W1b (g/m$^2$) and the coating weight of the Al-based plated layer on one face of the surface on the side not in contact with the first Al-based plated steel sheet 1 in the second Al-based plated steel sheet 2 is W2b (g/m$^2$), W2 = 0.5 $\times$ (W1b + W2b) is established.

Incidentally, in the first Al-based plated steel sheet 1, the surface 1a on the side in contact with the second Al-based plated steel sheet 2 and the surface 1b on the side not in contact with the second Al-based plated steel sheet 2, and in the second Al-based plated steel sheet 2, the surface 2b on the side not in contact with the first Al-based plated steel sheet 1 are faces exposed to a heat source when the manufactured overlapped blank is subjected to hot stamping heating, and become surfaces important for controlling the temperature increasing rate during the heating in the hot stamping.

The plating coating weight of the Al-based plated layer according to this embodiment is not limited in particular. However, as the characteristics required for the hot stamped component, the following are cited as preferable characteristics: (a) suppression of generation of Fe scales during hot stamping heating; and (b) suppression of chip or pressing flaw of plating caused by slipping (also called powdering) of plating during hot stamping.

The powdering occurs due to a compressive stress applied on the plating on the inner face of the bent part made during forming, a shear stress applied on the plating by the sliding from the metal mold during forming, or another cause. When the coating weight W1 or W2 of the Al-based plated layer on each of the steel sheets is less than 20 g/m$^2$, the thickness of the plating is thin, thus causing a problem of insufficient suppression of the Fe scales. Therefore, the coating weight W1 or W2 of the Al-based plated layer on each of the steel sheets is preferably set to 20 g/m$^2$ or more independently. The coating weight W1 or W2 of the Al-based plated layer on each of the steel sheets is more preferably 30 g/m$^2$ or more independently, and further preferably, in order of increasing preference, 35 g/m$^2$ or more, 40 g/m$^2$ or more, 45 g/m$^2$ or more, or 50 g/m$^2$ or more.

On the other hand, when the coating weight W1 or W2 of the plating per face on each of the steel sheets is greater than 120 g/m$^2$, a problem of insufficient suppression of the powdering occurs. Therefore, in this embodiment, the coating weight W1 or W2 of the plating per face on each of the steel sheets is preferably set to 120 g/m$^2$ or less independently. The coating weight W1 or W2 of the plating per face on each of the steel sheets is more preferably 110 g/m$^2$ or less independently, and further preferably, in order of increasing preference, 100 g/m$^2$ or less, 95 g/m$^2$ or less, or 90 g/m$^2$ or less. Incidentally, in the second Al-based plated steel sheet, the coating weight of the Al-based plated layer on the surface of the side in contact with the first Al-based plated steel sheet is not particularly defined.

However, the difference |W1 - W2| between the coating weights W1 and W2 of the plating per face on each of the steel sheets is preferably 40 g/m$^2$ or less. When the difference in the plating coating weight |W1 - W2| is 40 g/m$^2$ or less, spot weldability can be further improved in the hot stamped component to be manufactured. The difference in the plating coating weight |W1 - W2| is more preferably 35 g/m$^2$ or less, 30 g/m$^2$ or less, 25 g/m$^2$ or less, or 20 g/m$^2$ or less.

Incidentally, the thickness ($\mu$m) of the Al-based plated layer on each of the steel sheets can be approximated from the plating coating weight (g/m$^2$), and can be roughly found by Equation (1) below though depending on the chemical composition of the Al-based plated layer.

$$\text{(Plating thickness)} = \text{(Plating coating weight)}/3 \text{...Equation (1)}$$

FIG. 2 schematically illustrates a layer structure of a plated steel sheet 13 on one face side in which the Al-based plated layer according to this embodiment is provided on the surface of the base material steel sheet. When the Al-based plated layer according to this embodiment is manufactured by the hot-dip plating method, an aluminum-iron-based (Al-Fe-based) alloy layer (not illustrated) is formed near the boundary of an Al-based plated layer 14 with a base material steel sheet 15.

Incidentally, according to the general hot-dip plating method as a method of performing the Al-based plating on the base material steel sheet, the base material steel sheet is dipped in a hot-dip aluminum plating bath and subjected to gas wiping in nitrogen or atmosphere, and thereby the Al-based plated steel sheet whose coating weight is adjusted can be manufactured. As a result, the aluminum-iron-based alloy layer is necessarily formed by elution of Fe during hot-dip plating at the interface between the Al-based plated layer 14 and the base material steel sheet 15 in FIG. 2. In this description, it is assumed that the Al-based plated layer 14 in FIG. 2 also includes the aluminum-iron-based alloy layer.

The chemical composition of the hot-dip aluminum plating bath for forming the above-described Al-based plated layer is not particularly limited (that is, the chemical composition is substantially the same as that of the Al-based plated layer 14 except for Fe). However, the content of Al in the hot-dip aluminum plating bath is preferably 80 mass% or more in terms of being excellent in heat resistance required during hot stamping heating. Further, the content of Si in the hot-dip aluminum plating bath is preferably 2 mass% or more in terms of easy control of the thickness of the aluminum-iron-based alloy layer. Setting the content of Si to 2 mass% or more makes it possible to prevent the aluminum-iron-based alloy layer from becoming too thick and reducing formability. On the other hand, setting the content of Si in the hot-dip aluminum plating bath to 15 mass% or less makes it possible to prevent the alloying reaction during hot stamping heating from slowing down and reducing the productivity of hot stamping.

When the hot-dip aluminum plating bath contains 2 mass% or more and 15 mass% or less of Si, a eutectic structure of Al and Si is formed in the Al-based plated layer 14 formed by using such a plating bath based on a constitution diagram. In the case of the hot-dip plating method, 1 mass% or more and 5 mass% or less of Fe is inevitably contained in some cases as an eluted component from the base material steel sheet. Examples of other inevitable impurities include eluted components in a hot-dip plating facility and elements such as Cr, Mn, Zn, V, Ti, Sn, Ni, Cu, W, Bi, Mg, and Ca due to impurities in an ingot of the hot-dip aluminum plating bath, and these elements are contained by less than 1 mass% in some cases.

That is, the Al-based plated layer 14 according to this embodiment may be a plated layer having a chemical composition (average chemical composition) composed of by mass%, Al: 80 to 97%, Si: 2 to 15%, Fe: 1 to 15%, Cr: 0% or more and less than 1%, Mo: 0% or more and less than 1%, Zn: 0% or more and less than 1%, V: 0% or more and less than 1%, Ti: 0% or more and less than 1%, Sn: 0% or more and less than 1%, Ni: 0% or more and less than 1%, Cu: 0% or more and less than 1%, W: 0% or more and less than 1%, Bi: 0% or more and less than 1%, Mg: 0% or more and less than 1%, Ca: 0% or more and less than 1%, and the balance of impurities. Here, as described previously, the hot-dip aluminum plating bath inevitably contains 1 mass% or more and 5 mass% or less of Fe, whereas the aluminum-iron-based alloy layer is formed in the Al-based plated layer, and thus the proportion of Fe increases. Therefore, the chemical composition of the Al-based plated layer 14 may be Fe: 1 to 15%.

Examples of the metal structure of the above-described aluminum-iron-based alloy layer include a $\theta$ phase ($FeAl_3$), a $\eta$ phase ($Fe_2Al_5$), a $\zeta$ phase ($FeAl_2$), FesAl, and FeAl, which are binary alloys of Al and Fe, an Al solid-solution-based BCC phase ($\alpha 2$, $\alpha$), and so on, and the aluminum-iron-based alloy layer is composed of a combination of those plating phases. Examples of the metal structure of the aluminum-iron-based alloy layer in the case of containing Si include a $\tau 1$ phase ($Al_2Fe_3Si_3$), a $\tau 2$ phase ($Al_3FeSi$), a $\tau 3$ phase ($Al_2FeSi$), a $\tau 4$ phase ($Al_3FeSi_2$), a $\tau 5$ phase ($Al_8Fe_2Si$), a $\tau 6$ phase ($Al_9Fe_2Si_2$), a $\tau 7$ phase ($Al_3Fe_2Si_3$), a $\tau 8$ phase ($Al_2Fe_3Si_4$), a $\tau 10$ phase ($Al_4Fe_{1.7}Si$), a $\tau 11$ phase ($Al_5Fe_2Si$), and so on, (where each phase does not have a stoichiometric composition in some cases), and the metal structure of the aluminum-iron-based alloy layer is often composed of the $\tau 5$ phase or $\theta$ phase mainly.

Further, the coating weight of the above-described Al-based plated layer per face is measured using the method of JIS G 3314: 2019 JB. 3 (a sodium hydroxide-hexamethylenetetramine-hydrochloric acid peeling gravimetric method) after the Al-based plated layer on one face is protected with a seal beforehand.

<Lightness>

The lightness, which is important in this application, will be explained below with reference to FIG. 1. This lightness is the CIE 1976 lightness index L* (CIE 1976 lightness) defined in 3.3 of JIS Z 8781-4: 2013, and is simply referred to as "lightness" or "lightness L*" below.

The lightness L* of the surface of the first Al-based plated steel sheet 1 is described as L*1a on the surface 1a on the side in contact with the second Al-based plated steel sheet 2, and is described as L*1b on the surface 1b on the side not in contact with the second Al-based plated steel sheet 2. Further, the lightness L* of the surface of the second Al-based plated steel sheet 2 is described as L*2b on the surface 2b on the side not in contact with the first Al-based plated steel sheet 1. Then, L*1 = 0.5 × (L*1a + L*1b) and L*2 = 0.5 × (L*1b + L*2b) are defined. In this case, the overlapped blank for hot stamping 4 satisfies either the following condition (A) or (B) depending on how the carbon-based black coating is provided.

(A) In the case where the carbon-based black coating is provided at an upper layer of the Al-based plated layer on the side not in contact with the first Al-based plated steel sheet in the second Al-based plated steel sheet, L*b is 40 or more and 60 or less and L*1 is (L*b + 20) or more and 80 or less.

(B) In the case where the carbon-based black coating is provided at an upper layer of the Al-based plated layer on the side not in contact with the first Al-based plated steel sheet in the second Al-based plated steel sheet, and the carbon-based black coating is provided at an upper layer of the Al-based plated layer on the side not in contact with the second Al-based plated steel sheet in the first Al-based plated steel sheet, L*b is 20 or more and less than 40 and L*1 is (L*b + 20) or more and 60 or less.

Here, L*1 means the average lightness of the surface of the Al-based plated layer at the non-overlapped part (one-sheet part 4b) in the overlapped blank for hot stamping 4. Further, L*b means the average lightness of the surface of the Al-based plated layer at the overlapped part 4a in the overlapped blank for hot stamping. That is, L*b = 0.5 × (L*1b + L*2b) and L*1 = 0.5 × (L*1a + L*1b) are established.

[L*b, L*1]

A lower value of the lightness increases the temperature increasing rate in heating during hot stamping in the aluminum plated steel sheet. This is thought to be because a lower value of the lightness suggests that the surface of the aluminum plated steel sheet is blackened, and thus characteristics that easily absorb heat are obtained. Conversely, at the one-sheet part, the sheet thickness is thinner than at the overlapped part, and thus the temperature increases quickly, leading to an excessive amount of heating time. For this reason, it is important to increase the lightness at the one-sheet part to suppress heat absorption. That is, it is important to lower the lightness of the surface at the overlapped part having a thick sheet thickness, and conversely, to increase the lightness of the surface at the one-sheet part.

Further, they found that using the Al-based plated steel sheet makes it possible to obtain high lightness due to the surface having a silver-gray metallic luster, and increasing the thickness of the Al-based plated layer, (which can be thought as the coating weight of the Al-based plated layer), makes it possible to suppress the blackening of the plated surface caused by alloying of the plating reaching the surface, resulting in that high lightness can be maintained even during the hot stamping heating. Further, using the carbon-based black coating for the upper layer of the Al-based plated steel sheet makes it possible to reduce the lightness. Thus, by appropriately controlling the Al-based plated layer and the carbon-based black coating used in the Al-based plated steel sheet, the lightness can be adjusted to a desired value.

In the case of (A), L*b is 40 or more and 60 or less, and L*1 is (L*b + 20) or more and 80 or less. In other words, L*b satisfies Expression (a), and L*1 satisfies Expression (b).

$$40 \le L*b \le 60...\text{Expression (a)}$$

$$(L*b + 20) \le L*1 \le 80...\text{Expression (b)}$$

When L*b is greater than 60, the temperature increasing rate in heating during hot stamping at the overlapped part is not sufficiently improved. Therefore, L*b is set to 60 or less. L*b is preferably 58 or less, more preferably 56 or less, and further preferably 54 or less.

On the other hand, when L*b is less than 40, in addition to the fact that the above effects are saturated, the carbon-based black coating is formed to be thick, and thus, spatters are likely to be generated in the spot welding 3 when manufacturing the overlapped blank 4 in FIG. 1, failing to manufacture the blank in some cases. Further, when the carbon-based black coating becomes too thick, the coating may peel off, which is industrially undesirable due to contamination of a hot-stamping facility and at the same time, may fail to obtain a desired temperature increasing rate after hot stamping heating. Therefore, L*b is set to 40 or more. L*b is preferably 42 or more, more preferably 44 or more, and further preferably 46 or more.

Further, when L*1 is less than (L*b + 20), the one-sheet part is heated for an excessive amount of time compared to the overlapped part, and the spot weldability decreases. Therefore, L*1 is set to (L*b + 20) or more. L*1 is preferably (L*b + 22) or more, and more preferably (L*b + 24) or more.

On the other hand, when L*1 is greater than 80, the heating time becomes too short, resulting in that the temperature does not exceed the Ac3 point of the base material steel sheet and the collision property decreases. Therefore, L*1 is set to 80 or less. L*1 is preferably 78 or less and more preferably 76 or less.

In the case of (B), L*b is 20 or more and 40 or less, and L*1 is (L*b + 20) or more and 60 or less. That is, L*b satisfies Expression (A), and L*1 satisfies Expression (B).

$$20 \le L*b < 40...\text{Expression (A)}$$

$$(L*b + 20) \le L*1 \le 60...\text{Expression (B)}$$

When L*b is greater than 40, the temperature increasing rate is not improved sufficiently. Therefore, L*b is set to 40 or less. L*b is set to 40 or less, and thereby the temperature increasing rate during the hot stamping heating at the overlapped part is further improved. Furthermore, unlike the case of (A) described above, in the second Al-based plated steel sheet, the carbon-based black coating is provided at an upper layer of the Al-based plated layer on the side not in contact with the first Al-based plated steel sheet, and in the first Al-based plated steel sheet, the carbon-based black coating is provided at an upper layer of the Al-based plated layer on the side not in contact with the second Al-based plated steel sheet, and thus excessive formation of the thickness of the coating can be suppressed. As a result, it is possible to suppress the generation of spatters in the spot welding 3 when manufacturing the overlapped blank 4 in FIG. 1. L*b is preferably 38 or less, more preferably 36 or less, and further preferably 34 or less.

On the other hand, when L*b is less than 20, in addition to the fact that the above effects are saturated, the carbon-based black coating is formed to be thick, and thus, spatters are likely to be generated in the spot welding 3 when manufacturing the overlapped blank 4 in FIG. 1, failing to manufacture the blank in some cases. Therefore, L*b is set to 20 or more. L*b is preferably 22 or more and more preferably 24 or more.

Further, when L*1 is less than (L*b + 20), the one-sheet part is heated for an excessive amount of time compared to the overlapped part, and the spot weldability decreases. Therefore, L*1 is set to (L*b + 20) or more. L*1 is preferably (L*b + 22) or more, and more preferably (L*b + 24) or more.

On the other hand, when L*1 is greater than 80, the heating time becomes too short, resulting in that the temperature does not exceed the Ac3 point of the base material steel sheet and the collision property decreases. Therefore, L*1 is set to 80 or less. L*1 is preferably 78 or less and more preferably 76 or less.

As a method of measuring the lightness, for example, with a 30 × 30 mm test piece cut out, the lightness can be measured using a spectrophotometric colorimeter (SC-T-GV5 manufactured by Suga Test Instruments Co., Ltd., including specular reflection light) with a measurement beam diameter $\phi$ of 15 mm.

<Carbon-based black coating>

FIG. 3 schematically illustrates a layer structure of an Al-based plated steel sheet 16 on one face side in which the Al-based plated layer 14 is provided on the surface of the base material steel sheet 15 according to this embodiment, and a carbon-based black coating 17 is further provided at an upper layer of the Al-based plated layer 14.

In the second Al-based plated steel sheet 2, the carbon-based black coating 17 is provided at the upper layer of the Al-based plated layer located on the surface 2b of the side not in contact with the first Al-based plated steel sheet 1. The Al-based plated steel sheet has a silver-gray metallic luster surface, and thus the lightness is high. Here, providing the carbon-based black coating at the upper layer of the Al-based plated steel sheet makes it possible to reduce the lightness. In particular, the carbon-based black coating 17 is burned off by combustion by the oxidation reaction during heating in hot stamping and then is discharged as $CO_2$ or the like. As a result, it is possible to suppress the decrease in spot weldability of the overlapped hot stamp molded part caused by the remaining carbon-based black coating 17.

Incidentally, examples of the means to reduce the lightness without using the carbon-based black coating include a method of performing heating at about 700 to 800°C, thereby alloying the plating to the surface. However, carbides precipitate in the base material steel sheet, and thus the collision property after hot stamping decreases, resulting in that using the one produced by the above-described method as a material of the overlapped blank for hot stamping is not preferable. Further, examples of another means to reduce the lightness without using the carbon-based black coating include a method of applying electroplating of Zn, Zn-Ni, Zn-Fe to the upper layer of the Al-based plated layer, and a method of subjecting the Al-based plated steel sheet to an acid pickling treatment. However, both of these methods increase the amount of oxide on the surface of the Al-based plated layer after the hot stamping heating, which leads to the generation of spatters in the spot welding and therefore requires attention.

Further, in the first Al-based plated steel sheet 1, it is preferable to provide the carbon-based black coating at the upper layer of the Al-based plated layer located on the surface 1b of the side not in contact with the second Al-based plated steel sheet 2. The lightness is reduced also in the first Al-based plated steel sheet, and thereby the temperature increasing rate of the overlapped part can be further improved.

Incidentally, it is preferable that no carbon-based black coating should be provided on either the surface located at the surface 2a of the side in contact with the first Al-based plated steel sheet 1 in the second Al-based plated steel sheet 2 or the surface located at the surface 1a of the side in contact with the second Al-based plated steel sheet 2 in the first Al-based plated steel sheet 1. The intrusion of oxygen necessary for combustion of the coating is inhibited on the side in contact with the steel sheet, and thus unburned carbon-based black coating remains, which results in a factor that reduces the spot weldability of the hot stamped component.

Further, examples of the means to further increase the lightness of the Al-based plated steel sheet having a silver-gray metallic luster include heating the Al-based plated steel sheet to about 500 to 600°C and oxidizing its surface, thereby whitening the surface. This makes it possible to further increase the lightness of the surface of the Al-based plated steel sheet.

The film thickness of such a carbon-based black coating is preferably 0.3 $\mu$m or more and 10 $\mu$m or less. The film thickness of the carbon-based black coating is set to 0.3 $\mu$m or more, thereby making it possible to suppress the increase in lightness and increase the temperature increasing rate of the overlapped part. The film thickness of the carbon-based black coating is more preferably 0.4 $\mu$m or more, and further preferably, in order of increasing preference, 0.5 $\mu$m or more, 0.6 $\mu$m or more, or 0.7 $\mu$m or more.

On the other hand, the film thickness of the carbon-based black coating is set to 10 $\mu$m or less, thereby making it possible to reduce the lightness while ensuring economic efficiency, and to ensure spot weldability without leaving the coating after the hot stamping heating. Further, when the film thickness of the carbon-based black coating exceeds 10 $\mu$m, the coating may peel off, which is industrially undesirable due to contamination of a facility and at the same time, may fail to obtain a desired temperature increasing rate after hot stamping heating. The film thickness of the carbon-based black coating is more preferably 8 $\mu$m or less, and further preferably, in order of increasing preference, 6 $\mu$m or less, 5 $\mu$m or less, or 4 $\mu$m or less.

The film thickness of the carbon-based black coating can be found as an average value of the thicknesses of the coatings measured in three fields of view by performing observation of the cross section of the plating under an optical microscope (for example, area: 100 $\mu$m $\times$ 100 $\mu$m) (without etching) and performing measurement of the thickness of the coating at the upper layer of the aluminum plated layer in the three fields of view, as illustrated in FIG. 3. At this time, the coating is analyzed from the cross section with an electron probe micro analyzer (EPMA) and the coating with a carbon content of 30 mass% or more is determined to be the carbon-based black coating. The coating being a black coating is determined from the fact that the value of the lightness L* from the surface is 60 or less.

[Binder]

The carbon-based black coating 17 can selectively contain resin as a binder to improve the adhesiveness to the Al-based plated layer. The type of resin is not particularly limited, and examples thereof include a polyethylene resin, a polyolefin resin, a polyacrylic resin, a polymethacrylic acid resin, a polyepoxy resin, a polyurethane resin, a polycarbonate resin, and so on.

[At least one or more of Zn, Ti, Cu, and V are contained in the carbon-based black coating]

It is preferable to selectively contain at least one of Zn, Ti, Cu, and V in the carbon-based black coating further located at the upper layer of the Al-based plated layer applied to the surface of the second Al-based plated steel sheet 2 by 0.1 g/m$^2$ or more and 3.0 g/m$^2$ or less in total. The coating weight described here indicates the coating weight of Zn, Ti, Cu, or V per unit area. Zn, Ti, Cu, and V are elements that form oxides having good infrared absorption in addition to improving emissivity. Therefore, the carbon-based black coating containing such an element is provided, thereby making it possible to suppress the difference in temperature increasing rate between the overlapped part having a slow temperature increasing rate and the one-sheet part having a fast temperature increasing rate, which is a problem caused when used as an overlapped blank. In particular, the carbon-based black coating 17 described above is burned off during the hot stamping heating, whereas Zn, Ti, Cu, or V remains even during the hot stamping heating. Therefore, the carbon-based black coating containing such an element can further contribute to improving the temperature increasing rate at high temperatures. Further, Zn, Ti, Cu, and V may be contained in either a metal state or an oxide state. This is because they become oxides during the temperature increasing process and contribute to improving emissivity.

Such an effect of suppressing the difference in temperature increasing rate as described above can be exhibited by setting the total coating weight of such elements to 0.1 g/m$^2$ or more. Therefore, the total coating weight of such elements in the carbon-based black coating is preferably 0.1 g/m$^2$ or more. The total coating weight of such elements in the carbon-based black coating is more preferably 0.2 g/m$^2$ or more, further preferably 0.3 g/m$^2$ or more, and still more preferably 0.5 g/m$^2$ or more.

On the other hand, the total coating weight of such elements in the carbon-based black coating is set to 3.0 g/m$^2$ or less, thereby making it possible to exhibit such an effect of suppressing the difference in temperature increasing rate as described above without saturation. Further, Zn, Ti, Cu, and V remain even after the hot stamping heating and the total coating weight of such elements in the carbon-based black coating is set to 3.0 g/m$^2$ or less, thereby making it possible to maintain the spot weldability of the hot stamped component. The total coating weight of such elements in the carbon-based black coating is more preferably 2.5 g/m$^2$ or less and further preferably 2.0 g/m$^2$ or less.

The coating weights (contents) of Zn, Ti, Cu, and V can be found by performing elemental analyses from the surface using, for example, a fluorescent X-ray analysis apparatus (ZSX Primus manufactured by Rigaku Corporation) and quantifying the coating weights of Zn, Ti, Cu, and V

The method of treating the above-described carbon-based black coating 17 is not particularly limited, but the carbon-based black coating 17 can be manufactured, for example, by preparing an aqueous coating solution in which aqueous dispersion type carbon black (for example, RCF#52 manufactured by Mitsubishi Chemical Corporation), zinc oxide (for example, Nano Tek manufactured by C.I. Kasei Co., Ltd.) or titanium oxide (for example, Nano Tek manufactured by C.I. Kasei Co., Ltd.), copper oxide (for example, Nano Tek manufactured by C.I. Kasei Co., Ltd.), and vanadium oxide (manufactured by Hongwu International Group Ltd) are dispersed in water, applying it with a roll coater after performing the above-described hot-dip aluminum plating treatment, and performing a dry baking treatment. Alternatively, the carbon-based black coating 17 can be manufactured by using a method of vacuum deposition of metal of Zn, Ti, Cu, or V on the aluminum plated steel sheet.

Incidentally, as another aspect according to this embodiment, on the Al-based plated layer, both of the above-described carbon-based black coating 17 and a coating layer 17' containing at least one of Zn, Ti, Cu, and V (more specifically, these elements in a metal state or oxides of these elements) may be provided. In this case, the arrangement order of the carbon-based black coating 17 and the coating layer 17' containing at least one of Zn, Ti, Cu, and V is not particularly limited, but the carbon-based black coating 17 may be located at the upper layer of the coating layer 17' containing at least one of Zn, Ti, Cu, and V, or the coating layer 17' containing at least one of Zn, Ti, Cu, and V may be located at the upper layer of the carbon-based black coating 17.

Incidentally, even when the coating layer 17' containing at least one of Zn, Ti, Cu, and V is located at a lower layer of the carbon-based black coating 17, fluorescent X-rays easily penetrate the carbon-based black coating 17 as long as the film thickness of the carbon-based black coating 17 according this embodiment is employed. Therefore, even when the coating layer 17' containing at least one of Zn, Ti, Cu, and V is located at a lower layer of the carbon-based black coating 17, it is possible to measure the coating weights of Zn, Ti, Cu, and V by a fluorescent X-ray analysis method.

Further, such a carbon-based black coating 17 or coating layer 17' containing at least one of Zn, Ti, Cu, and V may be provided on both faces of the base material steel sheet, and is more preferably provided only on a face of the side exposed to the heat source during the hot stamping heating in the base material steel sheet.

<Welding>

In the overlapped blank for hot stamping 4 in which the first Al-based plated steel sheet 1 and the second Al-based plated steel sheet 2 are overlapped and welded, as the type of the welding, spot welding, seam welding, braze welding, laser welding, plasma welding, arc welding or the like can be selected. Here, in terms of establishing good contact of the overlapped part, the spot welding that can establish contact even at the inside of the overlapped part at a plurality of points and establish a direct bond by applying pressure between the steel sheets is preferable.

(2. Method of manufacturing the overlapped hot stamped component)

In the method of manufacturing the hot stamped component according to this embodiment, as illustrated in FIG. 1, the above-described overlapped blank for hot stamping 4 is heated, and when forming it immediately after such heating, the bent part obtained by bending at least a portion of the overlapped part is provided, thereby manufacturing the overlapped hot stamped component 12 in this embodiment.

Of particular importance in this embodiment is precisely controlling the heating time and the heating temperature. As illustrated in a comparative example in FIG. 5, it reveals that when the overlapped blank for hot stamping is heated at 920°C, the temperature increasing time of the overlapped part having a thick sheet thickness is slower than that of the one-sheet part. Therefore, in the hot stamping, a problem occurs in that the productivity of heating is slow for the purpose of heating the blank to the austenitizing temperature or higher and for the purpose of making the sheet temperature of the blank uniform. Further, when a long heating time is ensured in accordance with the temperature increasing time of the overlapped part, the one-sheet part whose temperature increases quickly is to undergo an excessive heating time. As a result, the alloying reaction of the aluminum plating progresses excessively, causing a problem that the spot weldability of the overlapped hot stamped component decreases.

Therefore, as illustrated in an invention example in FIG. 6, when the overlapped blank for hot stamping is heated at 920°C as described above, the carbon-based black coating is provided at the surface of the face 2b of the non-overlapped side of the second Al-based plated steel sheet 2 having a smaller area of the overlapped blank in FIG. 1, thereby making it possible to reduce the lightness and improve the temperature increasing rate. At this time, the excessive amount of heating time of the one-sheet part whose temperature increases quickly is also shortened, and the alloying reaction of the aluminum plating is suppressed, and the spot weldability of the overlapped hot stamped component improves.

In the case of (A), when heating the overlapped blank in a heating furnace at a temperature (atmospheric temperature) $T1$ (°C), the overlapped blank is heated for a time of $t1$ (minute) or more and $(t2 + \Delta t2)$ (minute) or less, which is calculated by Equation (d) to Equation (f) below, and then, the heated blank is molded by the metal mold, and at the same time, the molded blank is cooled (quenched) by heat removal from the metal mold (if necessary, the metal mold is cooled by cooling water passing through the inside of the metal mold to increase the cooling rate of the molded blank), or other means. Thereby, the overlapped hot stamped component 12 excellent in collision resistant property is obtained. Here, the times $t1$ and $t2$ are determined as the solutions to quadratic equations for the times $t1$ and $t2$, as in Equation (d) and Equation (e) below, where $t1$ is the smaller of the solutions to the quadratic equation in Equation (d) below, and $t2$ is the smaller of the solutions to the quadratic equation in Equation (e) below.

$$T1 = A1 \cdot t1^2 + B1 \cdot t1 + C1 \ldots \text{Equation (d)}$$

| | |
|---|---|
| $A1 = -0.3645d^5 + 6.343d^4 - 43.822d^3 + 151.71d^2 - 268.89d + 205.68$ | Equation (d-1) |

$B1 = +2.9347d^5 - 47.313d^4 + 298.84d^3 - 936.35d^2 + 1518.1d - 1197.6$ — Equation (d-2)

$$C1 = 1381.57 \ldots \text{Equation (d-3)}$$

$$T1 = A2 \cdot t2^2 + B2 \cdot t2 + C2 \ldots \text{Equation (e)}$$

$A2 = -0.4367d1^5 + 7.3789d1^4 - 49.107d1^3 + 161.95d1^2 - 269.2d1 + 188.97$ — Equation (e-1)

$B2 = +1.8594d1^5 - 31.034d1^4 + 204.62d1^3 - 675.11d1^2 + 1159.2d1 - 964.59$ — Equation (e-2)

$$C2 = 1367.39 \ldots \text{Equation (e-3)}$$

$$\Delta t2 = 2.6960 \times 10^{13} \times e^{(-0.03205 \times T1)} \ldots \text{Equation (f)}$$

Here, more specifically, t1, which is determined as the smaller of the solutions to the quadratic equation in Equation (d) above, is calculated from Equation (d') below.

$$t1 = [-B1 - \{B1^2 - (4 \times A1 \times (C1 - T1))\}^{0.5}]/2 \times A1 \ldots \text{Equation (d')}$$

Similarly, more specifically, t2, which is determined as the smaller of the solutions to the quadratic equation in Equation (e) above, is calculated from Equation (e') below.

$$t2 = [-B2 - \{B2^2 - (4 \times A2 \times (C2 - T1))\}^{0.5}]/2 \times A2 \ldots \text{Equation (e')}$$

Incidentally, in obtaining the above-described relational equations, the present inventors performed numerical calculation simulations based on a heat transfer equation in which the temperature is increased by radiation heat and a diffusion model for the plating alloying reaction, while varying the sheet thickness of the steel sheet forming the overlapped blank and taking into account actual operating conditions for the heating process in the hot stamping. From the simulation results, they were able to obtain findings about the temperature increasing time and the formation time of a diffusion layer, and based on the obtained findings, they formulated the conditions that must be satisfied by the heating temperature and the heating time. The results of the formulation are the above-described relational equations.

When the heating time t is less than the aforementioned t1 (minute), the heating is not sufficient, and thus the martensitic transformation of the overlapped part after hot pressing is to be insufficient, resulting in that the material hardness decreases and the collision resistant property of the part decreases. Further, when the heating time t is greater than the aforementioned (t2 + $\Delta$t2) (minute), the heating of the one-sheet part is to be excessively long, resulting in that the alloying reaction of the aluminum plating progresses excessively and the spot weldability decreases.

Here, it is preferable to set the heating time to (t2 + $\Delta$t2) or less, and at the same time, set the heating time to (t2 + $\Delta$t2') or less using Equation (f) below. Thereby, the alloying reaction of the aluminum plating is further suppressed to further improve the spot weldability. Incidentally, $\Delta$t2' $\leq$ $\Delta$t2 is established, and thus as illustrated in FIG. 7, as long as the heating time is (t2 + $\Delta$t2') or less, the heating time is always (t2 + $\Delta$t2) or less. For this reason, as long as the heating time is set to (t2 + $\Delta$t2') or less, the calculations related to Equation (f) and the like may be omitted.

$$\Delta t2' = 1.498 \times 10^{13} \times e^{(-0.03198 \times T1)} \ldots \text{Equation (f')}$$

As illustrated in FIG. 7, controlling the heating time to t1 (minute) (lower limit) or more and t2 + Δt2 (upper limit) or less makes it possible to obtain an overlapped hot stamped component that is excellent in hot stamping productivity and spot weldability. The upper limit of the heating time t is set to (t2 + Δt2), and thereby it becomes possible to avoid unnecessary prolongation of the heating time, which has been conventionally determined while ensuring a safety margin based on the results of preliminary tests, or the like, logically determine the upper limit of the heating time t, and further achieve a further improvement in productivity. Further, the upper limit of the heating time t is set to (t2 + Δt2), and thereby it becomes possible to suppress the increase in thickness of the diffusion layer also in the hot stamped component to be manufactured, which contributes to improving the spot weldability.

Preferably, as in the case of (B), the carbon-based black coating is provided at the surface of the face 2b of the non-overlapped side of the second Al-based plated steel sheet 2 having a smaller area of the overlapped blank in FIG. 1, to thereby reduce the lightness, and further, the carbon-based black coating is provided also at the surface of the face 1b of the non-overlapped side of the first Al-based plated steel sheet 1, to thereby reduce the lightness. This makes it possible to further improve the temperature increasing rate during the heating in the hot stamping.

The film thickness of the carbon-based black coating at the above-described face 2b and the film thickness of the carbon-based black coating at the face 1b may be the same or different. At this time, the excessive amount of heating time of the one-sheet part, where the temperature increases quickly, is also shortened, and the alloying reaction of the aluminum plating is also suppressed, and the spot weldability of the overlapped hot stamped component improves.

In this case, when heating the overlapped blank in a heating furnace at a temperature (atmospheric temperature) T3 (°C) for the time t3 (minute), the overlapped blank is heated for a time of t3 (minute) or more and (t4 + Δt4) (minute) or less, which is calculated by Equation (D) to Equation (F) below, and then, the heated blank is molded by the metal mold, and at the same time, the molded blank is cooled (quenched) by heat removal from the metal mold (if necessary, the metal mold is cooled by cooling water passing through the inside of the metal mold to increase the cooling rate of the molded blank), or other means. Thereby, the overlapped hot stamped component 12 excellent in collision resistant property is obtained. Here, the times t3 and t4 are determined as the solutions to quadratic equations for the times t3 and t4, as in Equation (D) and Equation (E) below, where t3 is the smaller of the solutions to the quadratic equation in Equation (D) below, and t4 is the smaller of the solutions to the quadratic equation in Equation (E) below.

$$T3 = A3 \cdot t3^2 + B3 \cdot t3 + C3 ... \text{Equation (D)}$$

$$A3 = -0.5693d^5 + 9.8168d^4 - 67.002d^3 + 228.11d^2 - 394.85d + 291.77 \qquad \text{Equation (D-1)}$$

$$B3 = +3.0472d^5 - 49.829d^4 + 320.43d^3 - 1026.6d^2 + 1706.7d - 1374.3 \qquad \text{Equation (D-2)}$$

$$C3 = 1394.21 ... \text{Equation (D-3)}$$

$$T3 = A4 \cdot t4^2 + B4 \cdot t4 + C4 ... \text{Equation (E)}$$

$$A4 = -0.3645d1^5 + 6.343d1^4 - 43.822d1^3 + 151.71d1^2 - 268.89d1 + 205.68 \qquad \text{Equation (E-1)}$$

$$B4 = +2.9347d1^5 - 47.313d1^4 + 298.84d1^3 - 936.35d1^2 + 1518.1d1 - 1197.6 \qquad \text{Equation (E-2)}$$

$$C4 = 1381.57 ... \text{Equation (E-3)}$$

$$\Delta t4 = 2.6960 \times 10^{13} \times e^{(-0.03205 \times T3)} ... \text{Equation (F)}$$

Here, more specifically, t3, which is determined as the smaller of the solutions to the quadratic equation in Equation (D) above, is calculated from Equation (D') below.

$$t3 = [-B1 - \{B3^2 - (4 \times A3 \times (C3 - T3))\}^{0.5}]/2 \times A3 ... \text{Equation (D')}$$

Similarly, more specifically, t4, which is determined as the smaller of the solutions to the quadratic equation in Equation (E) above, is calculated from Equation (E') below.

$$t4 = [-B4 - \{B4^2 - (4 \times A4 \times (C4 - T3))\}^{0.5}]/2 \times A4...\text{Equation (E')}$$

Incidentally, in obtaining the above-described relational equations as well, the present inventors performed numerical calculation simulations based on a heat transfer equation in which the temperature is increased by radiation heat and a diffusion model for the plating alloying reaction, while varying the sheet thickness of the steel sheet forming the overlapped blank and taking into account actual operating conditions for the heating process in the hot stamping. From the simulation results, they were able to obtain findings about the temperature increasing time and the formation time of a diffusion layer, and based on the obtained findings, they formulated the conditions that must be satisfied by the heating temperature and the heating time. The results of the formulation are the above-described relational equations.

When the heating time t is less than the aforementioned t3 (minute), the heating is not sufficient, and thus the martensitic transformation of the overlapped part after hot pressing is to be insufficient, resulting in that the material hardness decreases and the collision resistant property of the part decreases. Further, when the heating time t is greater than the aforementioned (t4 + Δt4) (minute), the heating of the one-sheet part is to be excessively long, resulting in that the alloying reaction of the aluminum plating progresses excessively and the spot weldability decreases.

Here, it is preferable to set the heating time to (t4 + Δt4) or less, and at the same time, set the heating time to (t4 + Δt4') or less using Equation (F") below. Thereby, the alloying reaction of the aluminum plating is further suppressed to further improve the spot weldability. Incidentally, Δt4' ≤ Δt4 is established, and thus as illustrated in FIG. 7, as long as the heating time is (t4 + Δt4') or less, the heating time is always (t4 + Δt4) or less. For this reason, as long as the heating time is set to (t4 + Δt4') or less, the calculations related to Equation (F) and the like may be omitted.

$$\Delta t4' = 1.498 \times 10^{13} \times e^{(-0.03198 \times T3)}...\text{Equation (F')}$$

As illustrated in FIG. 8, controlling the heating time to t3 (minute) (lower limit) or more and t4 + Δt4 (upper limit) or less makes it possible to obtain a more preferable overlapped hot stamped component that is excellent in hot stamping productivity and spot weldability. The upper limit of the heating time t is set to (t4 + Δt4), and thereby it becomes possible to avoid unnecessary prolongation of the heating time, which has been conventionally determined while ensuring a safety margin based on the results of preliminary tests, or the like, logically determine the upper limit of the heating time t, and further achieve a further improvement in productivity. Further, the upper limit of the heating time t is set to (t4 + Δt4), and thereby it becomes possible to suppress the increase in thickness of the diffusion layer also in the hot stamped component to be manufactured, which contributes to improving the spot weldability.

Incidentally, the above-described heating temperature means the maximum ultimate temperature of the steel sheets of the overlapped part. Examples of the heating method include heating by an electric furnace, a gas furnace, a far-infrared furnace, a near-infrared furnace, and so on, energization heating, high-frequency heating, induction heating, and so on. Here, the electric furnace, the gas furnace, and the far-infrared furnace are preferred because the overlapped blank tends to be large in area and a large blank can be heated at a uniform temperature.

The above-described heating temperature is generally preferably in the temperature range of the Ac3 point (for example, 800°C or 840°C) or higher at which the base material steel sheet is austenitized to 1000°C or lower. The heating temperature is more preferably 860°C or higher, and further preferably 880°C or higher, 890°C or higher, or 900°C or higher, in order to improve hardenability by dissolving carbides in the steel sheet and to shorten the heating time (improve productivity). Further, the heating temperature is more preferably 950°C or lower, and further preferably 930°C or lower, in terms of the ability to equalize the temperature increasing rate between the overlapped part and the one-sheet part.

Further, the above-described heating time means the time from the time when the overlapped blank is inserted into the heating furnace to the time when it is extracted from the heating furnace.

The time from when the overlapped blank is heated until the metal mold of a press machine comes down for forming to then come into contact with the overlapped blank is preferably 3 seconds or more and 20 seconds or less. The blank heated to the austenitizing temperature is cooled using a metal mold or a coolant such as water, to then be transformed into martensite, and as a result, an overlapped hot stamped component that is high in strength and excellent in collision resistant property is obtained. Therefore, it is preferable to cool the overlapped blank immediately after heating, and thus such time may be 0 seconds. However, in reality, 3 seconds or more are often required for conveying the blank. Further, when such time is greater than 20 seconds, the transformation from austenite to ferrite begins as the blank is cooled down, which may fail to obtain a martensitic structure after pressing in the blank.

During forming as described above, cooling is performed using a metal mold or a coolant such as water, and the cooling rate is preferably 30°C/second or more, and more preferably 50°C/second or more. The method of calculating the cooling rate (°C/second) is as follows. That is, a time k (second) from when the overlapped blank and the metal mold come into contact with each other until the metal mold starts to increase in temperature after the metal mold is held at the bottom dead center is found, a blank temperature C1 before the overlapped blank and the metal mold come into contact with each other is measured with a radiation thermometer, and a blank temperature C2 after the metal mold is held at the bottom dead center and increases in temperature is measured with a radiation thermometer. The obtained results may be used to calculate the average cooling rate (C1 - C2)/k (°C/second).

(3. Overlapped hot stamped component)

The overlapped hot stamped component 12 according to this embodiment manufactured as above includes a first Al-Fe-based alloy plated steel sheet having a sheet thickness of T1 (mm) and at least one second Al-Fe-based alloy plated steel sheet that is overlapped and welded on the first Al-Fe-based alloy plated steel sheet, has a smaller area than the first Al-Fe-based alloy plated steel sheet, and has a sheet thickness of T2 (mm).

Incidentally, as described above, the hot stamped component 12 is manufactured by heating the overlapped blank for hot stamping 4 in which the first Al-based plated steel sheet 1 and the second Al-based plated steel sheet 2 are overlapped and welded, and then further subjecting the overlapped blank for hot stamping 4 to bending or the like. Therefore, the first Al-Fe-based alloy plated steel sheet and the second Al-Fe-based alloy plated steel sheet forming the hot stamped component 12 do not necessarily have a flat shape. For example, as illustrated in FIG. 1, the first Al-Fe-based alloy plated steel sheet includes the bent part 8 of the head top part, and the like, and the second Al-Fe-based alloy plated steel sheet includes the bent part 8 of the head top part, the bent part 9 of the flange part, and the like. Although the name "steel sheet" is used, the shape is not necessarily flat. In this embodiment, in order to distinguish between the steel sheet forming the hot stamped component 12 and the steel sheet forming the overlapped blank 4, as a matter of convenience, the former is referred to as an alloy plated steel sheet (for example, an Al-Fe-based alloy plated steel sheet), and the latter is referred to as a plated steel sheet (for example, an Al-based plated steel sheet) ("alloy" is not added).

The first Al-Fe-based alloy plated steel sheet in the overlapped hot stamped component 12 is an Al-Fe-based alloy plated steel sheet including Al-Fe-based alloy plated layers having an average plating thickness of K1 ($\mu$m) on both faces of the first steel sheet. Further, the second Al-Fe-based alloy plated steel sheet in the overlapped hot stamped component 12 is a plated steel sheet including an Al-Fe-based alloy plated layer having a plating thickness of K2 ($\mu$m) on a surface of the side not in contact with the first Al-Fe-based alloy plated steel sheet. Incidentally, in the second Al-Fe-based alloy plated steel sheet, the plating thickness of the Al-Fe-based alloy plated layer on the surface of the side in contact with the first Al-Fe-based alloy plated steel sheet is not particularly defined.

Here, the average plating thickness K1 or K2 of the Al-Fe-based alloy plated layer on the first Al-Fe-based alloy plated steel sheet of the overlapped hot stamped component 12 is preferably 25 $\mu$m or more independently, more preferably 30 $\mu$m or more, and further preferably 35 $\mu$m or more.

On the other hand, the average plating thickness K1 or K2 of the Al-Fe-based alloy plated layer on the first Al-Fe-based alloy plated steel sheet is preferably 60 $\mu$m or less, and more preferably 55 $\mu$m or less, and further preferably 50 $\mu$m or less independently.

The plating thicknesses of the Al-Fe-based alloy plated layers of the first Al-Fe-based alloy plated steel sheet and the second Al-Fe-based alloy plated steel sheet each fall within the above-described range, thereby making it possible to maintain the spot weldability of the overlapped hot stamped component 12 in a good state.

The above-described plating thickness can be found as an average value of the plating thicknesses measured in three fields of view by performing observation of the cross section of the plating under an optical microscope (area: 100 $\mu$m $\times$ 100 $\mu$m) after nital etching and performing measurement of the plating thickness in the three fields of view. Incidentally, regarding the plating thickness of the first steel sheet, there are the position of the one-sheet part 4b and the position of the overlapped part 4a in contact with the second Al-Fe-based alloy plated steel sheet, and the plating thickness of the first Al-Fe-based alloy plated steel sheet is measured at the one-sheet part from the point that the temperature increasing rate is fast, the heating time in the hot stamping is the longest, and the spot weldability is likely to deteriorate.

The Al-Fe-based alloy plated layer is a layer formed when Fe diffuses to the surface of the Al-based plated layer due to the heating during hot stamping (in other words, an alloy plated layer containing at least Al and Fe). The Al-Fe-based alloy plated layer is composed of a combination of phases such as a $\theta$ phase ($FeAl_3$), a $\eta$ phase ($Fe_2Al_5$), a $\zeta$ phase ($FeAl_2$), FesAl, FeAl, and Al solid-solution Fe each being a compound layer of Al and Fe. Further, the Al-Fe-based alloy plated layer in the case of containing Si in the plating also contains a $\tau$1 phase ($Al_2Fe_3Si_3$), a $\tau$2 phase ($Al_3FeSi$), a $\tau$3 phase ($Al_2FeSi$), a $\tau$4 phase ($Al_3FeSi_2$), a $\tau$5 phase ($Al_8Fe_2Si$), a $\tau$6 phase ($Al_9Fe_2Si_2$), a $\tau$7 phase ($Al_3Fe_2Si_3$), a $\tau$8 phase ($Al_2Fe_3Si_4$), a $\tau$10 phase ($Al_4Fe_{1.7}Si$), and a $\tau$11 phase ($Al_5Fe_2Si$), (where each phase does not have a stoichiometric composition in some cases), and the Al-Fe-based alloy plated layer is often composed of any of the $\tau$1 phase ($Al_2Fe_3Si_3$), the $\eta$ phase ($Fe_2Al_5$), FeAl, and Al solid-solution Fe, or a plurality of phases thereof mainly.

By the heating during hot stamping, in particular, Al in the Al-based plating and Fe in the base material steel sheet diffuse to each other. Therefore, as a phase formed through the diffusion of Al into the base material steel sheet, a layer containing a BCC phase of Al solid-solution Fe and a FeAl phase in order from the base material steel sheet side is formed.

The layer containing these phases is also called a diffusion layer (Diffusion Layer). Here, such a diffusion layer can be identified by observing the cross section after nital etching with an optical microscope, as explained below. Further, when it is impossible to identify the diffusion layer by the observation with an optical microscope, the diffusion layer can be identified by analyzing the cross section with an electron probe micro analyzer (EPMA). In this event, in EPMA analysis results, a layer containing Al: 30 mass% or less and Fe: 70 mass% or more may be set as a diffusion layer 20.

Specifically, as illustrated in FIG. 9 and FIG. 10, in an overlapped hot stamped component 18, a layer 19 is a layer that mainly contains the $\eta$ phase, the $\tau$1 phase, and the FeAl phase, and includes the diffusion layer 20. The thickness of the Al-Fe-based alloy plated layer is measured as the thickness of the layer 19, and the thickness of the diffusion layer is measured as the thickness of the layer 20. For example, an example where a cross section was observed with an optical microscope after nital etching is illustrated in FIG. 10.

The thickness of the diffusion layer included in the Al-Fe-based alloy plated layer at the portion of the first Al-Fe-based alloy plated steel sheet that is not overlapped with the second Al-Fe-based alloy plated steel sheet is described as D1 ($\mu$m), and the thickness of the diffusion layer included in the Al-Fe-based alloy plated layer of the second Al-Fe-based alloy plated steel sheet is described as D2 ($\mu$m). In the hot stamped component 12 according to this embodiment, the upper limit of the heating time during the hot stamping heating is set to a short time of (t2 + $\Delta$t2) (or t4 + $\Delta$t4), and thus, it is possible to reduce the thicknesses D1 ($\mu$m) and D2 ($\mu$m) of the diffusion layers to 3 $\mu$m or more and 10 $\mu$m or less independently. The case where the thickness of the diffusion layer is 3 $\mu$m or more means that the plating is sufficiently alloyed, which makes it possible to prevent unalloyed Al from remaining on the surface and to prevent the decrease in spot weldability. The thickness of the diffusion layer is more preferably 4 $\mu$m or more, and further preferably 5 $\mu$m or more. On the other hand, setting the thickness of the diffusion layer to 10 $\mu$m or less makes it possible to prevent the decrease in spot weldability. The thickness of the diffusion layer is more preferably 9 $\mu$m or less, and further preferably 8 $\mu$m or less. As a result, the spot weldability of the one-sheet part improves in the hot stamped component 12 according to this embodiment.

It has been known that the spot weldability of the Al-Fe-based plated layer is suppressed by binary alloys ($FeAl_3$, $Fe_2Al_5$, $FeAl_2$) of Al-Fe, and there is a relationship in which as the Al-dissolved Fe layer becomes thinner, the binary alloys of Al-Fe become thicker.

As a method of specifying the plating thickness K1, K2 of the Al-Fe-based alloy plated layer and the thickness D1, D2 of the diffusion layer, the cross section of the plating is subjected to nital etching in a field of view of 100 $\mu$m $\times$ 100 $\mu$m, and is observed with an optical microscope. As illustrated in FIG. 10, the plating thickness and the thickness of the diffusion layer are measured with an optical microscope. More specifically, the cross section of the plating is observed through the above-described method at at least three locations, and the thickness of the Al-Fe-based alloy plated layer 19 and the thickness of the diffusion layer 20 at each observation location are specified. After that, average values of the obtained thicknesses are calculated, and the obtained average values may be set to the thicknesses of the Al-Fe-based alloy plated layer 19 and the diffusion layer 20. However, when the observation with an optical microscope fails to identify the diffusion layer, an analysis is performed using an electron probe micro analyzer (EPMA), and the thickness of the layer containing Al: 30 mass% or less and Fe: 70 mass% or more is measured at at least three locations, and the average value of the measured thicknesses is set to the thickness of the diffusion layer 20.

Incidentally, such a diffusion layer as described above is a layer formed by inward diffusion within the Al-based plated layer, and thus, the thicknesses D1 and D2 of the diffusion layers are strongly affected almost only by the heating conditions of hot stamping and are not affected by the initial plating thickness. Further, even if the plating coating weight on the second Al-based plated steel sheet is increased, it is impossible to make the thickness D2 of the diffusion layer of the second Al-Fe-based alloy plated steel sheet, which has a slower heating rate, substantially the same value as the thickness D1 of the diffusion layer of the first Al-Fe-based alloy plated steel sheet.

Further, the plating thicknesses K1 and K2 of the Al-Fe-based alloy plated layers are affected not only by the plating adhesion before hot stamping but also by the heating conditions (heating temperature, holding time) of hot stamping. Further, the plating thicknesses K1 and K2 of the Al-Fe-based alloy plated layers are affected not only by these factors, but also by the sheet thickness, which affects the heating time at high temperatures, and the lightness, and thus are not affected only by the initial plating thickness.

The overlapped hot stamped component 12 in this embodiment, when used as an automotive part, is generally used after being subjected to welding, phosphoric acid-based conversion treatment, electrodeposition coating, and so on. Accordingly, for example, a zinc phosphate coating and a phosphoric acid coating by the phosphoric acid-based conversion treatment, an organic coating of 5 $\mu$m or more and 50 $\mu$m or less by the electrodeposition coating on the surface of such coatings, and so on are formed on the surface of the hot stamped component 12 in some cases. For improving the external quality and corrosion resistance, coatings such as intermediate coating and finish coating are further performed after the electrodeposition coating in some cases.

[Examples]

Hereinafter, the present invention will be further specifically explained using examples.

## EP 4 484 029 A1

(Example 1)

A first Al-based plated steel sheet 1 and a second Al-based plated steel sheet 2 listed in Table 1 were fabricated by the method to be described below, and were subjected to spot welding 3 as illustrated in FIG. 1, and thereby an overlapped blank for hot stamping 4 was fabricated. As the first Al-based plated steel sheet 1, a cold-rolled steel sheet through ordinary hot-rolling process and cold-rolling process and having (a chemical composition: by mass%, C: 0.23%, Si: 0.30%, Mn: 1.2%, P: 0.010%, S: 0.002%, Cr: 0.25%, Ti: 0.020%, Al: 0.042%, N: 0.0030%, B: 0.0020%, and the balance: Fe and impurities) was used as a sample material and an aluminum plating treatment was performed on its both faces on a Sendzimir hot-dip aluminum plating treatment line. After the plating, the plating coating weight was adjusted to 80 g/m$^2$ per side by the gas wiping method, and then cooling was performed, and the first Al-based plated steel sheet 1 was fabricated. The plating bath composition in this event was 89 mass% Al-9 mass% Si-2 mass% Fe.

Regarding Level A15, a treatment was performed in which the face 1a in contact with the second Al-based plated steel sheet of the Al-based plated steel sheet of the first Al-based plated steel sheet was pickled (with 5% hydrochloric acid), to thereby reduce the lightness. Regarding Level A16, a treatment was performed in which the face 1a in contact with the second Al-based plated steel sheet and the face 1b not in contact with the second Al-based plated steel sheet of the Al-based plated steel sheet of the first Al-based plated steel sheet were both pickled (with 5% hydrochloric acid), to thereby reduce the lightness. Further, regarding Levels A17 and A18, a treatment was performed in which by performing heating at 550°C, the Al-based plated layer on the surface was melted, to increase the lightness.

The second Al-based plated steel sheet 2 was also fabricated in the same manner as the first Al-based plated steel sheet 1, and a carbon-based black coating was applied to the Al-based plated surface to have a film thickness of 0.5 to 8.0 μm.

This blank was subjected to hot stamping heating at a heating temperature in Table 1 to investigate the temperature increasing rate of an overlapped part, and after being heated for a time in Table 1, the overlapped part was subjected to mold cooling at a cooling rate of 30°C/second or more after 8 seconds, and thereby an overlapped hot stamped component 12 was obtained. Two flange parts 11 of a non-overlapped part (one-sheet part) were cut out, and spot weldability was investigated with a pair of steel sheets of the same type.

Regarding each level in Table 1, examples of the invention of this application (to be simply described as "invention example" below) are listed as A2 to A4, A7, A8, A11, A16, A17, A19, A20, A23 to A25, and A27, and comparative examples are listed as A1, A5, A6, A9, A10, A12 to A15, A18, A21, A22, A26, and A28 to A30.

Sheet thicknesses t1 and t2 of the steel sheets were measured using a micrometer based on JIS B7502: 2016, as described above. Further, regarding the lightnesses L*1a, L*1b, and L*2b, a 50 × 50 mm test piece was cut out, and the lightnesses L*1a, L*1b, and L*2b were measured using a spectrophotometric colorimeter (SC-T-GV5 manufactured by Suga Test Instruments Co., Ltd., including specular reflection light) with a measurement beam diameter φ = 15 mm. The film thickness of the carbon-based black coating was measured through cross-sectional observation as described above.

Further, the thicknesses D1 and D2 of the diffusion layers of the obtained overlapped hot stamped component were measured through cross-sectional observation using an optical microscope as described above (each was measured at three locations and the average value was found).

In order to measure the hardness of the overlapped hot stamped component, the hardness of the second Al-based plated steel sheet at the overlapped part, which is likely to have a low hardness because the thickness is thick and thus the heating rate is the slowest and the cooling rate by the metal mold is also slow, was measured from the cross section using a micro Vickers hardness tester under a load of 9.8107 N. The evaluation criteria are as follows, and Evaluation G was determined to be good, and Evaluation NG (No Good) was determined to be poor.

<Evaluation criteria>

G = Hardness 400 HV or more
NG = Hardness less than 400 HV

In order to investigate the spot weldability of the overlapped blank for hot stamping, two flange parts 11 of a non-overlapped part (one-sheet part) in the overlapped hot stamped component 12 in FIG. 1 were cut out, and spot weldability was investigated with a pair of steel sheets of the same type under the following welding conditions. In the evaluation criteria, regarding the range of a welding current value at which a weld nugget during spot welding can obtain a diameter of 4√t (t is a sheet thickness) and a welding current value at which spatters (Splash) are generated (referred to as an appropriate current range), Evaluation G3 (Good 3) was determined to be good, VG (Very Good) was determined to be even better, and Evaluation NG (No Good) was determined to be poor.

<Evaluation criteria>

VG: Appropriate current range 1.5 kA or more
G: Appropriate current range 1.0 kA or more and less than 1.5 kA
NG: Appropriate current range less than 1.0 kA
Welding source: Direct-current inverter, Electrode force: 3.9 kN
Electrode shape: DR, Tip diameter 6φ (R40) (material: chromium copper)
Initial pressurization time: 60 cycles, Welding time 22 cycles, Holding time 10 cycles
Welding current value: 4 kA to 15 kA, Welding at 0.2 kA pitch

In Table 1, the evaluation results obtained by investigating the temperature increasing rate of the overlapped part of the blank and the spot weldability after hot stamping (HS) were summarized.

[Table 1]

**TABLE 1**

| LEVEL | | FIRST Al-BASED PLATED STEEL SHEET | | | | SECOND Al-BASED PLATED STEEL SHEET | | | L*b | L*1 | d (mm) | HEATING TEMPERATURE T1 (°C) | HEATING TIME t (MINUTE) | HEATING TIME LOWER LIMIT t1 (MINUTE) | HEATING TIME UPPER LIMIT | | COMPONENT THICKNESS OF DIFFUSION LAYER | | COMPONENT PROPERTY EVALUATION | |
|---|---|---|---|---|---|---|---|---|---|---|---|---|---|---|---|---|---|---|---|---|
| | | SHEET THICKNESS d1 (mm) | LIGHTNESS L*1a | LIGHTNESS L*1b | CARBON-BASED BLACK COATING AT FACE 1b | SHEET THICKNESS d2 (mm) | LIGHTNESS L*2b | CARBON-BASED BLACK COATING AT FACE 2b | | | | | | | t2+Δt2 (MINUTE) | t2+Δt2' (MINUTE) | D1 (μm) | D2 (μm) | HARDNESS AT OVERLAPPED PART | SPOT WELDABILITY OF ONE-SHEET PART |
| A1 | COMPARATIVE EXAMPLE | 1.6 | 75 | 75 | ABSENT | 1.6 | 25 | PRESENT | 50.0 | 75.0 | 3.2 | 890 | 6.0 | 6.5 | 14.9 | 10.4 | 6.4 | 2.2 | NG | VG |
| A2 | INVENTION EXAMPLE | 1.6 | 75 | 75 | ABSENT | 1.6 | 25 | PRESENT | 50.0 | 75.0 | 3.2 | 890 | 7.0 | 6.5 | 14.9 | 10.4 | 7.5 | 3.0 | G | VG |
| A3 | INVENTION EXAMPLE | 1.6 | 75 | 75 | ABSENT | 1.6 | 25 | PRESENT | 50.0 | 75.0 | 3.2 | 890 | 9.0 | 6.5 | 14.9 | 10.4 | 9.2 | 6.5 | G | VG |
| A4 | INVENTION EXAMPLE | 1.6 | 75 | 75 | ABSENT | 1.6 | 25 | PRESENT | 50.0 | 75.0 | 3.2 | 890 | 13.0 | 6.5 | 14.9 | 10.4 | 12.6 | 9.9 | G | G |
| A5 | COMPARATIVE EXAMPLE | 1.6 | 75 | 75 | ABSENT | 1.6 | 25 | PRESENT | 50.0 | 75.0 | 3.2 | 890 | 16.0 | 6.5 | 14.9 | 10.4 | 14.5 | 12.6 | G | G |
| A6 | COMPARATIVE EXAMPLE | 1.6 | 75 | 75 | ABSENT | 1.6 | 25 | PRESENT | 50.0 | 75.0 | 3.2 | 910 | 4.0 | 6.0 | 9.4 | 7.0 | 3.7 | 1.0 | NG | NG |
| A7 | INVENTION EXAMPLE | 1.6 | 75 | 75 | ABSENT | 1.6 | 25 | PRESENT | 50.0 | 75.0 | 3.2 | 910 | 6.0 | 6.0 | 9.4 | 7.0 | 9.0 | 2.3 | G | VG |
| A8 | INVENTION EXAMPLE | 1.6 | 75 | 75 | ABSENT | 1.6 | 25 | PRESENT | 50.0 | 75.0 | 3.2 | 910 | 8.0 | 6.0 | 9.4 | 7.0 | 12.3 | 7.5 | G | G |
| A9 | COMPARATIVE EXAMPLE | 1.6 | 75 | 75 | ABSENT | 1.6 | 25 | PRESENT | 50.0 | 75.0 | 3.2 | 910 | 10.0 | 6.0 | 9.4 | 7.0 | 14.5 | 11.6 | G | G |
| A10 | COMPARATIVE EXAMPLE | 1.6 | 75 | 75 | ABSENT | 1.6 | 25 | PRESENT | 50.0 | 75.0 | 3.2 | 930 | 5.0 | 5.6 | 6.3 | 5.1 | 9.8 | 2.1 | NG | NG |
| A11 | INVENTION EXAMPLE | 1.6 | 75 | 75 | ABSENT | 1.6 | 25 | PRESENT | 50.0 | 75.0 | 3.2 | 930 | 6.0 | 5.6 | 6.3 | 5.1 | 12.8 | 5.7 | G | VG |
| A12 | COMPARATIVE EXAMPLE | 1.6 | 75 | 75 | ABSENT | 1.6 | 25 | PRESENT | 50.0 | 75.0 | 3.2 | 930 | 9.0 | 5.6 | 6.3 | 5.1 | 17.5 | 14.5 | G | G |
| A13 | COMPARATIVE EXAMPLE | 1.6 | 75 | 75 | ABSENT | 1.6 | 75 | ABSENT | 75.0 | 75.0 | 3.2 | 930 | 6.0 | 5.6 | 6.3 | 5.1 | 13.1 | 1.8 | NG | NG |
| A14 | COMPARATIVE EXAMPLE | 1.6 | 75 | 75 | ABSENT | 1.6 | 75 | ABSENT | 75.0 | 75.0 | 3.2 | 930 | 9.0 | 5.6 | 6.3 | 5.1 | 18.0 | 12.5 | NG | G |
| A15 | COMPARATIVE EXAMPLE | 1.6 | 50 | 75 | ABSENT | 1.6 | 25 | PRESENT | 50.0 | 62.5 | 3.2 | 930 | 6.0 | 5.6 | 6.3 | 5.1 | 12.6 | 5.6 | G | NG |
| A16 | INVENTION EXAMPLE | 1.6 | 68 | 68 | ABSENT | 1.6 | 25 | PRESENT | 46.5 | 68.0 | 3.2 | 930 | 6.0 | 5.6 | 6.3 | 5.1 | 12.0 | 5.5 | G | G |
| A17 | INVENTION EXAMPLE | 1.6 | 78 | 78 | ABSENT | 1.6 | 25 | PRESENT | 51.5 | 78.0 | 3.2 | 930 | 6.0 | 5.6 | 6.3 | 5.1 | 12.3 | 4.8 | G | G |
| A18 | COMPARATIVE EXAMPLE | 1.6 | 85 | 85 | ABSENT | 1.6 | 25 | PRESENT | 55.0 | 85.0 | 3.2 | 930 | 6.0 | 5.6 | 6.3 | 5.1 | 12.0 | 4.5 | G | NG |
| A19 | INVENTION EXAMPLE | 1.6 | 75 | 75 | ABSENT | 1.6 | 20 | PRESENT | 47.5 | 75.0 | 3.2 | 930 | 6.0 | 5.6 | 6.3 | 5.1 | 12.5 | 5.2 | G | G |
| A20 | INVENTION EXAMPLE | 1.6 | 75 | 75 | ABSENT | 1.6 | 34 | PRESENT | 54.5 | 75.0 | 3.2 | 930 | 6.0 | 5.6 | 6.3 | 5.1 | 12.7 | 5.0 | G | G |
| A21 | COMPARATIVE EXAMPLE | 1.0 | 75 | 75 | ABSENT | 1.0 | 65 | PRESENT | 70.0 | 75.0 | 2.0 | 920 | 6.0 | 3.6 | 6.2 | 4.5 | 12.5 | 2.0 | NG | G |
| A22 | COMPARATIVE EXAMPLE | 1.0 | 75 | 75 | ABSENT | 1.0 | 25 | PRESENT | 50.0 | 75.0 | 2.0 | 920 | 7.0 | 4.9 | 7.2 | 5.5 | 12.5 | 10.4 | G | G |
| A23 | INVENTION EXAMPLE | 1.4 | 75 | 75 | ABSENT | 1.4 | 25 | PRESENT | 50.0 | 75.0 | 2.8 | 920 | 8.0 | 7.3 | 8.4 | 6.7 | 12.8 | 9.5 | G | NG |
| A24 | INVENTION EXAMPLE | 2.0 | 75 | 75 | ABSENT | 2.0 | 25 | PRESENT | 50.0 | 75.0 | 4.0 | 920 | 9.0 | 8.2 | 9.0 | 7.3 | 13.0 | 6.3 | G | G |
| A25 | INVENTION EXAMPLE | 2.3 | 75 | 75 | ABSENT | 2.3 | 25 | PRESENT | 50.0 | 75.0 | 4.6 | 920 | 9.0 | 11.6 | 10.5 | 8.8 | 11.0 | 5.5 | G | G |
| A26 | COMPARATIVE EXAMPLE | 3.0 | 75 | 75 | ABSENT | 3.0 | 25 | PRESENT | 50.0 | 75.0 | 6.0 | 920 | 9.0 | 11.6 | 10.5 | 8.8 | 12.5 | 0.8 | NG | G |
| A27 | INVENTION EXAMPLE | 2.5 | 75 | 75 | ABSENT | 2.3 | 25 | PRESENT | 50.0 | 75.0 | 4.8 | 920 | 9.0 | 9.0 | 9.4 | 7.7 | 12.8 | 4.3 | G | G |
| A28 | COMPARATIVE EXAMPLE | 2.7 | 75 | 75 | ABSENT | 2.3 | 25 | PRESENT | 50.0 | 75.0 | 5.0 | 920 | 9.0 | 10.4 | 9.9 | 8.1 | 12.1 | 2.7 | NG | NG |
| A29 | COMPARATIVE EXAMPLE | 2.7 | 75 | 75 | ABSENT | 2.3 | 25 | PRESENT | 50.0 | 75.0 | 5.0 | 900 | 12.0 | 11.1 | 14.1 | 10.8 | 11.8 | 7.5 | NG | G |
| A30 | COMPARATIVE EXAMPLE | 2.0 | 75 | 75 | ABSENT | 2.0 | 75 | ABSENT | 75.0 | 75.0 | 4.0 | 900 | 8.0 | 7.9 | 12.5 | 9.3 | 9.2 | 1.3 | NG | VG |

A2 to A4, A7, A8, A11, A16, A17, A19, A20, A23 to A25, and A27, which are the invention examples, each had the sheet thickness within the range of the present invention, included the carbon-based black coating, and had the relationship between the heating temperature and the heating time satisfying Expression (a) to Equation (f), and thus the hardness at the overlapped part after hot stamping and the spot weldability were good. In particular, A2, A3, and A7 each being the invention example obtained more preferable evaluation results in which the spot weldability was determined to be VG because the heating time satisfied Equations (d), (e), and preferable Equation (f).

In A1, A5, A6, A9, A10, and A12 each being the comparative example, the relationship between the heating temperature and the time did not satisfy Expression (a) to Equation (f), and thus the hardness at the overlapped part or the spot weldability was poor. A13, A14, and A30 each being the comparative example did not include the carbon-based black coating, and thus the temperature increasing rate was slow and the hardness at the overlapped part was poor. In A15 being the comparative example, the value of L*1 did not exceed (L*b + 20), and thus overheating of the one-sheet part was not suppressed and the spot weldability was poor. In A18 being the comparative example, the value of L*1 exceeded 80, and thus the spot weldability was poor. In A21 being the comparative example, the value of the lightness L*b exceeded 60, and thus the hardness at the overlapped part was poor. In A22 being the comparative example, the total sheet thickness of the first Al-based plated steel sheet and the second Al-based plated steel sheet was less than 2.5 mm, and thus the heating time was excessive and the spot weldability at the one-sheet part was poor. In A26, A28, and A29 each being the comparative example, the total sheet thickness of the first Al-based plated steel sheet and the second Al-based plated steel sheet was greater than 4.8 mm, and thus the temperature increasing rate at the overlapped part was slow and the hardness at the overlapped part was poor.

(Example 2)

Under the same manufacturing conditions as Level A16 in Example 1, a first Al-based plated steel sheet and a second Al-based plated steel sheet were fabricated, and a carbon-based black coating was formed on the Al-based plated steel sheet of the second Al-based plated steel sheet to fabricate a level with a film thickness of 15 $\mu$m, and as a result, the value of the lightness L*2b was 10 and the value of L*b was 39. As a result that tape peeling (tape: CT405AP-24 manufactured by Nichiban Co., Ltd.) was performed, peeling of the coating was observed, which was not practical. No peeling was observed in A16 and A19 in the same test.

(Example 3)

Under the same manufacturing conditions as Level A3 in Example 1, a first Al-based plated steel sheet and a second Al-based plated steel sheet were fabricated, and a carbon-based black coating was formed on an Al-based plated layer of the second Al-based plated steel sheet. At this time, Levels A31, A32, and A33 were fabricated in which the plating coating weight on the second Al-based plated steel sheet was 55 g/m$^2$, 45 g/m$^2$, and 30 g/m$^2$ per side.

Levels A3, A31, A32, and A33 obtained were heated under the conditions of Level A3 in Example 1, and quenched overlapped hot stamp molded bodies were obtained. A second Al-Fe-based alloy plated steel sheet was cut out from the obtained overlapped hot stamped component and spot welded under the same conditions as those described in Example 1, and the spot weldability of the second Al-Fe-based alloy plated steel sheet was evaluated.

As a result, the score of Level A3 and Level A31 was VG, and the score of Level A32 and Level A33 was G. The reason for this is thought to be because in Levels A3 and A31, the value |W1 - W2| obtained by subtracting the plating coating weight W2 of the second Al-based plated steel sheet from the plating coating weight W1 of the first Al-based plated steel sheet was 25 g/m$^2$ or less, which was within a preferable range, whereas, in Levels A32 and A33, the value |W1 - W2| obtained by subtracting the plating coating weight W2 of the second Al-based plated steel sheet from the plating coating weight W1 of the first Al-based plated steel sheet was 35 g/m$^2$ or more, which was outside the above-described preferable range. Incidentally, the hardness at the overlapped part in Levels A31, A32 and A33 and the spot weldability of the one-sheet part in the first Al-Fe-based alloy plated steel sheet were determined to be score G and score VG, respectively, as in Level A3.

(Example 4)

Under the same manufacturing conditions as in Example 1 listed in Table 2, a carbon-based black coating was applied to an Al-based plated surface at a non-overlapped part of each of a first Al-based plated steel sheet and a second Al-based plated steel sheet to have a film thickness of 0.5 to 8.0 $\mu$m. This blank was subjected to hot stamping heating at a heating temperature in Table 1 to investigate the temperature increasing rate of an overlapped part, and after being heated for a time in Table 1, the overlapped part was subjected to mold cooling at a cooling rate of 30°C/second or more after 8 seconds, and thereby an overlapped hot stamped component 12 was obtained. Two flange parts 11 of a non-overlapped part (one-sheet part) were cut out, and spot weldability was investigated with a pair of steel sheets of the same type. Regarding each level in Table 2, examples of the invention of this application are listed as B1 to B7.

[Table 2]

TABLE 2

| | | FIRST Al-BASED PLATED STEEL SHEET | | | | SECOND Al-BASED PLATED STEEL SHEET | | | | | | | | | HEATING TIME LOWER LIMIT | HEATING TIME UPPER LIMIT | | COMPONENT THICKNESS OF DIFFUSION LAYER | | COMPONENT PROPERTY EVALUATION | |
|---|---|---|---|---|---|---|---|---|---|---|---|---|---|---|---|---|---|---|---|---|---|
| | LEVEL | SHEET THICKNESS d1 (mm) | LIGHTNESS L*1a | L*1b | CARBON-BASED BLACK COATING AT FACE 1b | SHEET THICKNESS d2 (mm) | LIGHTNESS L*2b | CARBON-BASED BLACK COATING AT FACE 2b | L*b | L*1 | d (mm) | HEATING TEMPERATURE T3 (°C) | HEATING TIME t (MINUTE) | t3 (MINUTE) | t4 + Δt4 (MINUTE) | t4 + Δt4' (MINUTE) | D1 (µm) | D2 (µm) | HARDNESS AT OVERLAPPED PART | SPOT WELDABILITY OF ONE-SHEET PART |
| INVENTION EXAMPLE | B1 | 1.6 | 75 | 25 | PRESENT | 1.6 | 25 | PRESENT | 25.0 | 50.0 | 3.2 | 890 | 6.0 | 5.7 | 14.4 | 9.9 | 6.5 | 2.5 | G | VG |
| INVENTION EXAMPLE | B2 | 1.6 | 75 | 25 | PRESENT | 1.6 | 25 | PRESENT | 25.0 | 50.0 | 3.2 | 890 | 7.0 | 5.7 | 14.4 | 9.9 | 8.0 | 4.4 | G | VG |
| INVENTION EXAMPLE | B3 | 1.6 | 75 | 25 | PRESENT | 1.6 | 25 | PRESENT | 25.0 | 50.0 | 3.2 | 890 | 9.0 | 5.7 | 14.4 | 9.9 | 9.5 | 7.5 | G | VG |
| INVENTION EXAMPLE | B4 | 1.6 | 75 | 25 | PRESENT | 1.6 | 25 | PRESENT | 25.0 | 50.0 | 3.2 | 890 | 13.0 | 5.7 | 14.4 | 9.9 | 12.3 | 11.1 | G | G |
| INVENTION EXAMPLE | B5 | 1.6 | 75 | 25 | PRESENT | 1.6 | 25 | PRESENT | 25.0 | 50.0 | 3.2 | 930 | 5.0 | 5.0 | 5.9 | 4.7 | 11.5 | 2.4 | G | G |
| INVENTION EXAMPLE | B6 | 1.6 | 75 | 30 | PRESENT | 1.6 | 30 | PRESENT | 30.0 | 52.5 | 3.2 | 930 | 5.0 | 5.0 | 5.9 | 4.7 | 11.5 | 2.5 | G | G |
| INVENTION EXAMPLE | B7 | 1.6 | 75 | 35 | PRESENT | 1.6 | 35 | PRESENT | 35.0 | 55.0 | 3.2 | 930 | 5.0 | 5.0 | 5.9 | 4.7 | 11.8 | 2.2 | G | G |

In Level A1 being the comparative example in Table 1, the hardness at the overlapped part was poor with the same sheet thickness, heating temperature, and heating time, but Invention example B1 exhibited a good result in terms of the hardness at the overlapped part. Invention example B4 also had a good hardness at the overlapped part and good spot weldability at the one-sheet part. Regarding B2 and B3, in Level A10 being the comparative example in Table 1, the hardness at the overlapped part was poor with the same sheet thickness, heating temperature, and heating time, but Invention examples B2 to B4 exhibited a good result in terms of the hardness at the overlapped part.

Preferred embodiments of the present invention have been explained above with reference to the accompanying drawings, but the present invention is not limited to the embodiments. It should be understood that various changes and modifications are readily apparent to those skilled in the art within the scope of the technical spirit as set forth in claims, and those should also be covered by the technical scope of the present invention.

Incidentally, this application claims priority based on the invention filed on May 19, 2022, having the following gist.

[a]

A method of manufacturing an overlapped hot stamped component includes:

an overlapped blank heating step that heats an overlapped blank in a heating furnace;
a heated blank conveying step that conveys the heated overlapped blank from the heating furnace to a pressing device; and
a hot stamping step that presses the heated overlapped blank with a metal mold provided in the pressing device to obtain an overlapped hot stamped component, in which
the overlapped blank is formed of a first steel sheet having a sheet thickness d1 (mm) and at least one second steel sheet having a sheet thickness d2 (mm) with a smaller area than the first steel sheet, the second steel sheet overlapped and welded on the first steel sheet,
the first steel sheet and the second steel sheet each are an Al-based plated steel sheet including Al-based plated layers on both faces of the steel sheet, and
the second steel sheet includes a carbon-based black coating as an upper layer of at least a part of the Al-based plated layer on the side not in contact with the first steel sheet, and
when lightness L* of the surface of the first steel sheet defined in JIS Z 8781-4 is set to L*1a on the surface of the side in contact with the second steel sheet and is set to L*1b on the surface of the side not in contact with the second steel sheet, and lightness L* of the surface of the second steel sheet defined in JIS Z 8781-4 is set to L*2b on the surface of the side not in contact with the first steel sheet,
an average value L*b of L*1b and L*2b is 40 or more and 60 or less, and an average value L*1 of L*1a and L*1b is (L*b + 20) or more and 80 or less, and
the total sheet thickness d = (d1 + d2) of a part where the first steel sheet and the second steel sheet are overlapped is 2.5 mm or more and 5.0 mm or less, and
in the overlapped blank heating step, when the overlapped blank is heated in a heating furnace at a temperature T1 (°C) for a time t (minute), the overlapped blank is heated in the heating furnace for a heating time of a time t1 (minute) or more and (t2 + Δt2) (minute) or less determined by graphs of Equations (1) to (9) below on a coordinate plane defined by the heating time t (minute) and the heating temperature T1 (°C).
Here, T1, t1, t2, and Δt2 are described below.

$$T1 = A1 \cdot t1^2 + B1 \cdot t1 + C1 ... \text{Equation (1)}$$

$$A1 = -0.3645d^5 + 6.343d^4 - 43.822d^3 + 151.71d^2 - 268.89d + 205.68 \quad \text{Equation (2)}$$

$$B1 = +2.9347d^5 - 47.313d^4 + 298.84d^3 - 936.35d^2 + 1518.1d - 1197.6$$

$$C1 = 1381.57 ... \text{Equation (4)}$$

$$T1 = A2 \cdot t2^2 + B2 \cdot t2 + C2 ... \text{Equation (5)}$$

$$A2 = -0.4367d1^5 + 7.3789d1^4 - 49.107d1^3 + 161.95d1^2 - 269.2d1 + 188.97 \quad \text{Equation (6)}$$

$$B2 = +1.8594d1^5 - 31.034d1^4 + 204.62d1^3 - 675.11d1^2 + 1159.2d1 - 964.59 \quad \text{Equation (7)}$$

$$C2 = 1367.39 ... \text{Equation (8)}$$

$$\Delta t2 = 2.6960 \times 10^{13} \times e^{(-0.03205 \times T1)}...\text{Equation (9)}$$

[b] The method of manufacturing the overlapped hot stamped component according to [a], in which the $\Delta t2$ satisfies Equation (10) below.

$$\Delta t2 = 1.498 \times 10^{13} \times e^{(-0.03198 \times T1)}...\text{Equation (10)}$$

[c]
A method of manufacturing an overlapped hot stamped component includes:

an overlapped blank heating step that heats an overlapped blank in a heating furnace;
a heated blank conveying step that conveys the heated overlapped blank from the heating furnace to a pressing device; and
a hot stamping step that presses the heated overlapped blank with a metal mold provided in the pressing device to obtain an overlapped hot stamped component, in which
the overlapped blank is formed of a first steel sheet having a sheet thickness d1 (mm) and at least one second steel sheet having a sheet thickness d2 (mm) with a smaller area than the first steel sheet, the second steel sheet overlapped and welded on the first steel sheet,
the first steel sheet and the second steel sheet each are an Al-based plated steel sheet including Al-based plated layers on both faces of the steel sheet, and
the first steel sheet includes a carbon-based black coating as an upper layer of at least a part of the Al plated layer on the side not in contact with the second steel sheet, and
the second steel sheet includes a carbon-based black coating as an upper layer of at least a part of the Al-based plated layer on the side not in contact with the first steel sheet, and
when lightness L* of the surface of the first steel sheet defined in JIS Z 8781-4 is set to L*1a on the surface of the side in contact with the second steel sheet and is set to L*1b on the surface of the side not in contact with the second steel sheet, and lightness L* of the surface of the second steel sheet defined in JIS Z 8781-4 is set to L*2b on the surface of the side not in contact with the first steel sheet,
an average value L*b of L*1b and L*2b is 20 or more and less than 40, and an average value L*1 of L*1a and L*1b is (L*b + 20) or more and 60 or less, and
the total sheet thickness d = (d1 + d2) of a part where the first steel sheet and the second steel sheet are overlapped is 2.5 mm or more and 5.0 mm or less, and
in the overlapped blank heating step, when the overlapped blank is heated in a heating furnace at a temperature T3 (°C) for a time t (minute), the overlapped blank is heated in the heating furnace for a heating time of a time t3 (minute) or more and (t4 + $\Delta t4$) (minute) or less determined by graphs of Equations (11) to (20) below on a coordinate plane defined by the heating time t (minute) and the heating temperature T3 (°C).
Here, T3, t3, t4, and $\Delta t4$ are described below.

$$T3 = A3 \cdot t3^2 + B3 \cdot t3 + C3...\text{Equation (11)}$$

A3 = -0.5693d⁵ + 9.8168d⁴ - 67.002d³ + 228.11d² - 394.85d + 291.77     Equation (12)

B3 = 3.0472d⁵ - 49.829d⁴ + 320.43d³ - 1026.6d² + 1706.7d - 1374.3     Equation (13)

$$C3 = 1394.21...\text{Equation (14)}$$

$$T3 = A4 \cdot t4^2 + B4 \cdot t4 + C4...\text{Equation (15)}$$

A4 = -0.3645d1⁵ + 6.343d1⁴ - 43.822d1³ + 151.71d1² - 268.89d1 + 205.68     Equation (16)

B4 = 2.9347d1⁵ - 47.313d1⁴ + 298.84d1³ - 936.35d1² + 1518.1d1 - 1197.6     Equation (17)

$$C4 = 1381.57 ... \text{Equation (18)}$$

$$\Delta t4 = 2.6960 \times 10^{13} \times e^{(-0.03205 \times T3)} ... \text{Equation (19)}$$

[d] The method of manufacturing the overlapped hot stamped component according to claim 3, in which the $\Delta t4$ satisfies Equation (20) below.

$$\Delta t4 = 1.498 \times 10^{13} \times e^{(-0.03198 \times T3)} ... \text{Equation (20)}$$

[Explanation of Codes]

1 first Al-based plated steel sheet
1a face in contact with second Al-based plated steel sheet of first Al-based plated steel sheet
1b face not in contact with second Al-based plated steel sheet of first Al-based plated steel sheet
2 second Al-based plated steel sheet
2a face in contact with first Al-based plated steel sheet of second Al-based plated steel sheet
2b face not in contact with first Al-based plated steel sheet of second steel sheet
3 welded part
4 overlapped blank for hot stamping
4a overlapped part of overlapped blank for hot stamping
4b one-sheet part of overlapped blank for hot stamping
5 heating furnace for hot stamping
6 press metal mold for hot stamping
7 head top part
8 bent part on head top part side
9 bent part on flange side
10 vertical wall part
11 flange part
12 overlapped hot stamped component
13 surface on one side of Al-based plated steel sheet
14 Al-based plated layer
15 base material steel sheet
16 surface on one side of Al-based plated steel sheet including carbon-based black coating at upper layer of Al-based plated layer
17 carbon-based black coating
18 surface on one side of Al-Fe-based alloy plated steel sheet
19 Al-Fe-based alloy plated layer
20 diffusion layer
21 base material steel sheet

## Claims

1. A heating method of an overlapped blank for hot stamping, comprising:

   heating an overlapped blank for hot stamping in a heating furnace at a temperature T1, the overlapped blank for hot stamping including:
   a first Al-based plated steel sheet having a sheet thickness d1; and
   a second Al-based plated steel sheet having a sheet thickness d2, the second Al-based plated steel sheet overlapped and welded on the first A-based plated steel sheet, having a smaller area than the first Al-based plated steel sheet, and including a carbon-based black coating at a surface of the Al-based plated steel sheet on the side not in contact with the first Al-based plated steel sheet, wherein
   the overlapped blank for hot stamping satisfies Expression (a) to Expression (c) below, and
   a heating temperature is set to t1 or more and t2 + $\Delta$t2 or less.

Here, T1 is the temperature of the heating furnace, t1 is the smaller of the solutions to a quadratic equation in Equation (d) below, t2 is the smaller of the solutions to a quadratic equation in Equation (e) below, and regarding $\Delta t2$, Equation (f) below is established, the units of d, d1, and d2 are mm, the unit of T1 is °C, and the units of t1, t2, and $\Delta t2$ are minute.

$$40 \leq L^*b \leq 60 ... \text{Expression (a)}$$

$$(L^*b + 20) \leq L^*1 \leq 80 ... \text{Expression (b)}$$

$$2.5 \leq d \leq 4.8 ... \text{Expression (c)}$$

$$T1 = A1 \cdot t1^2 + B1 \cdot t1 + C1 ... \text{Equation (d)}$$

$$T1 = A2 \cdot t2^2 + B2 \cdot t2 + C2 ... \text{Equation (e)}$$

$$\Delta t2 = 2.6960 \times 10^{13} \times e^{(-0.03205 \times T1)} ... \text{Equation (f)}$$

Regarding L*b, L*1, L*1a, L*1b, L*2b, A1, B1, C1, A2, B2 and C2, the following are set.

$$L^*b = 0.5 \times (L^*1b + L^*2b) ... \text{Equation (a-1)}$$

$$L^*1 = 0.5 \times (L^*1a + L^*1b) ... \text{Equation(b-1)}$$

$$d = d1 + d2 ... \text{Equation (c-1)}$$

L*1a: lightness L* of the surface on the side in contact with the second steel sheet of the first steel sheet
L*1b: lightness L* of the surface on the side not in contact with the second steel sheet of the first steel sheet
L*2b: lightness L* of the surface on the side not in contact with the first steel sheet of the second steel sheet

$A1 = -0.3645d^5 + 6.343d^4 - 43.822d^3 + 151.71d^2 - 268.89d + 205.68$      Equation (d-1)

$B1 = 2.9347d^5 - 47.313d^4 + 298.84d^3 - 936.35d^2 + 1518.1d - 1197.6$      Equation (d-2)

$$C1 = 1381.57 ... \text{Equation (d-3)}$$

$A2 = -0.4367d1^5 + 7.3789d1^4 - 49.107d1^3 + 161.95d1^2 - 269.2d1 + 188.97-$      Equation (e-1)

$B2 = 1.8594d1^5 - 31.034d1^4 + 204.62d1^3 - 675.11d1^2 + 1159.2d1 - 964.59$      Equation (e-2)

$$C2 = 1367.39 ... \text{Equation (e-3)}$$

2. The heating method of the overlapped blank for hot stamping according to claim 1, wherein

the heating time is set to t2 + $\Delta t2$' or less.
Here, regarding $\Delta t2$', Equation (f) below is established, and the unit of $\Delta t2$' is minute.

$$\Delta t2' = 1.498 \times 10^{13} \times e^{(-0.03198 \times T1)}...\text{Equation (f')}$$

3. A heating method of an overlapped blank for hot stamping, comprising:

heating an overlapped blank for hot stamping in a heating furnace at a temperature T3, the overlapped blank for hot stamping including:

a first Al-based plated steel sheet having a sheet thickness d1; and
a second Al-based plated steel sheet having a sheet thickness d2, the second Al-based plated steel sheet overlapped and welded on the first A-based plated steel sheet, having a smaller area than the first Al-based plated steel sheet, and including a carbon-based black coating at a surface layer of the Al-based plated steel sheet on the side not in contact with the first Al-based plated steel sheet, wherein
the first Al-based plated steel sheet includes a carbon-based black coating at a surface of the side not in contact with the second Al-based plated steel sheet,
the overlapped blank for hot stamping satisfies Expression (A) to Expression (C) below, and
a heating time is set to t3 or more and t4 + $\Delta$t4 or less.
Here, T3 is the temperature of the heating furnace, t3 is the smaller of the solutions to a quadratic equation in Equation (D) below, t4 is the smaller of the solutions to a quadratic equation in Equation (E) below, and regarding $\Delta$t4, Equation (F) below is established, the units of d, d1, and d2 are mm, the unit of T3 is °C, and the units of t3, t4, and $\Delta$t4 are minute.

$$20 \le L^*b < 40...\text{Expression (A)}$$

$$(L^*b + 20) \le L^*1 \le 60...\text{Expression (B)}$$

$$2.5 \le d \le 4.8...\text{Expression (C)}$$

$$T3 = A3 \cdot t3^2 + B3 \cdot t3 + C3...\text{Equation (D)}$$

$$T3 = A4 \cdot t4^2 + B4 \cdot t4 + C4...\text{Equation (E)}$$

$$\Delta t4 = 2.6960 \times 10^{13} \times e^{(-0.03205 \times T3)}...\text{Equation (F)}$$

Regarding L*b, L*1, L*1a, L*1b, L*2b, A3, B3, C3, A4, B4 and C4, the following are set.

$$L^*b = 0.5 \times (L^*1b + L^*2b)...\text{Equation (A-1)}$$

$$L^*1 = 0.5 \times (L^*1a + L^*1b)...\text{Equation (B-1)}$$

$$d = d1 + d2...\text{Equation (C-1)}$$

L*1a: lightness L* of the surface on the side in contact with the second steel sheet of the first steel sheet
L*1b: lightness L* of the surface on the side not in contact with the second steel sheet of the first steel sheet
L*2b: lightness L* of the surface on the side not in contact with the first steel sheet of the second steel sheet

$A3 = -0.5693d^5 + 9.8168d^4 - 67.002d^3 + 228.11d^2 - 394.85d + 291.77$      Equation (D-1)

$B3 = 3.0472d^5 - 49.829d^4 + 320.43d^3 - 1026.6d^2 + 1706.7d - 1374.3$      Equation (D-2)

$$C3 = 1394.21 ... \text{Equation (D-3)}$$

$$A4 = -0.3645d1^5 + 6.343d1^4 - 43.822d1^3 + 151.71d1^2 - 268.89d1 + 205.68 \qquad \text{Equation (E-1)}$$

$$B4 = 2.9347d1^5 - 47.313d1^4 + 298.84d1^3 - 936.35d1^2 + 1518.1d1 - 1197.6 \qquad \text{Equation (E-2)}$$

$$C4 = 1381.57 ... \text{Equation (E-3)}$$

4. The heating method of the overlapped blank for hot stamping according to claim 3, wherein

   the heating time is set to t4 + ∆t4' or less.
   Here, regarding ∆t4', Equation (F') below is established, and the unit of ∆t4' is minute.

$$\Delta t4' = 1.498 \times 10^{13} \times e^{(-0.03198 \times T3)} ... \text{Equation (F')}$$

[FIG. 1]

HEATING FURNACE 5

PRESSING

METAL MOLD 6

HOT STAMPING PROCESS

[FIG. 2]

[FIG. 3]

[FIG. 4]

[FIG. 5]

SHEET TEMPERATURE
OF ONE-SHEET PART

SHEET TEMPERATURE
OF OVERLAPPED PART

TEMPERATURE (°C)

HEATING TIME (SECOND)

[FIG. 6]

SHEET TEMPERATURE
OF ONE-SHEET PART

SHEET TEMPERATURE
OF OVERLAPPED PART

TEMPERATURE (°C)

HEATING TIME (SECOND)

[FIG. 7]

[FIG. 8]

[FIG. 9]

[FIG. 10]

## INTERNATIONAL SEARCH REPORT

| | |
|---|---|
| | International application No. |
| | **PCT/JP2023/018803** |

| | |
|---|---|
| **A.** **CLASSIFICATION OF SUBJECT MATTER** | |
| *B21D 22/20*(2006.01)i; *B21D 24/00*(2006.01)i<br>FI:   B21D22/20 G; B21D22/20 H; B21D24/00 M | |
| According to International Patent Classification (IPC) or to both national classification and IPC | |

| **B.** **FIELDS SEARCHED** |
|---|
| Minimum documentation searched (classification system followed by classification symbols)<br>    B21D22/20; B21D24/00; B23K11/16 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| **C.** | **DOCUMENTS CONSIDERED TO BE RELEVANT** | |
|---|---|---|
| Category* | Citation of document, with indication, where appropriate, of the relevant passages | Relevant to claim No. |
| A | WO 2019/194308 A1 (NIPPON STEEL CORP.) 10 October 2019 (2019-10-10)<br>    entire text, all drawings | 1-4 |
| A | JP 2011-149084 A (NIPPON STEEL CORP.) 04 August 2011 (2011-08-04)<br>    entire text, all drawings | 1-4 |
| A | WO 2010/005121 A1 (NIPPON STEEL CORP.) 14 January 2010 (2010-01-14)<br>    entire text, all drawings | 1-4 |
| A | JP 2017-189930 A (NIPPON STEEL & SUMITOMO METAL CORP.) 19 October 2017<br>(2017-10-19)<br>    entire text, all drawings | 1-4 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/018803**

| Patent document cited in search report | | | Publication date (day/month/year) | Patent family member(s) | | | Publication date (day/month/year) |
|---|---|---|---|---|---|---|---|
| WO | 2019/194308 | A1 | 10 October 2019 | US | 2021/0197525 | A1 | |
| | | | | entire text, all drawings | | | |
| | | | | EP | 3733321 | A1 | |
| | | | | CN | 110582359 | A | |
| | | | | CA | 3061938 | A1 | |
| | | | | KR | 10-2020-0116496 | A | |
| | | | | MX | 2020010274 | A | |
| | | | | TW | 201943867 | A | |
| JP | 2011-149084 | A | 04 August 2011 | (Family: none) | | | |
| WO | 2010/005121 | A1 | 14 January 2010 | US | 2011/0174418 | A1 | |
| | | | | entire text, all drawings | | | |
| | | | | EP | 2312005 | A1 | |
| | | | | CA | 2729942 | A1 | |
| | | | | CN | 102089451 | A | |
| | | | | MX | 2011000056 | A | |
| | | | | KR | 10-1259258 | B1 | |
| | | | | BR | PI0915898 | A2 | |
| JP | 2017-189930 | A | 19 October 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011088484 A
- JP 6178301 B
- JP 2016124029 A
- WO 2002103073 A
- JP 2011149084 A
- WO 2010005121 A
- WO 2021172379 A
- WO 2019194308 A